# EUROPEAN PATENT APPLICATION

(11) **EP 4 304 230 A1**
(43) Date of publication of application: **10.01.2024**
(21) Application number: 22763020.9
(22) Date of filing: 21.02.2022
(51) Int. Cl.: H04W 16/14, H04W 28/16, H04W 52/34

(54) **COMMUNICATION CONTROL DEVICE, NETWORK DEVICE, COMMUNICATION CONTROL SYSTEM, COMMUNICATION CONTROL METHOD, AND INFORMATION COMMUNICATION METHOD**

(30) Priority: 01.03.2021 JP 2021032086
(71) Applicant: Sony Group Corporation, Tokyo 108-0075 (JP)
(72) Inventor: KASAI, Hirofumi, Tokyo 108-0075 (JP); FURUICHI, Sho, Tokyo 108-0075 (JP); TAKANO, Hiroaki, Tokyo 108-0075 (JP)
(74) Representative: Witte, Weller & Partner Patentanwälte mbB
(86) International application number: PCT/JP2022/006869
(87) International publication number: WO 2022/185964

(57) **Abstract**

[Problem] Provided are a communication control device, a network device, a communication control system, a communication control method, and an information communication method that make it possible to increase a usage efficiency of a frequency band.

[Solution] A communication control device according to the present disclosure includes: a receiving unit that receives a request for radio wave use pertaining to a first wireless communication device; a transmitting unit that, when the request is received, transmits an obtainment request for communication status information indicating a communication status of a second wireless communication device; and a control unit that receives the communication status information of the second wireless communication device after the obtainment request has been transmitted, and determines a condition of the radio wave use by the first wireless communication device based on the communication status information of the second wireless communication device.

## Description

### [Technical Field]

The present invention relates to a communication control device, a network device, a communication control system, a communication control method, and an information communication method.

### [Background Art]

The data communication bandwidth required for wireless networks continues to expand, and with it, so too do the frequency resources required. However, there is a problem in that there are limited frequency resources that can be allocated in a wireless network.

To solve such a problem, frequency sharing techniques for sharing frequency resources between systems, among frequency bands already allocated for existing applications, which are not being temporally and spatially used, have been put into practical use, such as those described in NPL 1 and NPL 2.

### [Citation List]

### [Non Patent Literature]

[NPL 1]
   FCC, Title 47 CFR Part 96 Citizens Broadband Radio Service, https7/ecfr.federalregister.gov/current/title-47/chapter-I/subchapter-D/p art-96
[NPL 2]
   Wireless Innovation Forum, WINNF-TS-0112-V1.9.1 Requirements for Commercial Operation in the U.S. 3550-3700 MHz Citizens Broadband Radio Service Band

### [Summary]

### [Technical Problem]

The frequency sharing techniques disclosed in NPL 1 and NPL 2 permit frequency band use and power transmission for a base station based on a request for a transmission power value and a request for a frequency band from the base station. Specifically, for example, if interference with a Protected Area (PPA; PAL Protection Area) of the base station that has the rights of a Priority Access License (PAL) is less than or equal to a threshold, transmission at the requested power value in the requested frequency band is permitted under GAA (General Authorized Access).

The wider the frequency band used by the base station is, the greater the amount of data is that can be transmitted and received by a wireless terminal communicating with the base station. For example, the amount of data that can be transmitted and received is essentially doubled when the frequency band has a 10 MHz width as opposed to a 5 MHz width.

In the frequency sharing technique disclosed in NPL 2, once a frequency band has been permitted once, transmission in the same frequency band can be continued even if, for example, the amount of data communicated by the user (wireless terminal) of the base station is very small relative to that frequency band. Similarly, once a transmission power value has been permitted once, transmission can continue at the same transmission power value even if, for example, the wireless terminal is only present in the vicinity of the base station. In other words, even if the base station can reduce the transmission power value and narrow the coverage, the base station can continue transmission with the same transmission power value, even if a connection can be made with the wireless terminal.

The present disclosure provides a communication control device, a network device, a communication control system, a communication control method, and an information communication method that make it possible to increase the usage efficiency of a frequency band.

### [Solution to Problem]

A communication control device according to the present disclosure includes:
a receiving unit that receives a request for radio wave use pertaining to a first wireless communication device;
a transmitting unit that, when the request is received, transmits an obtainment request for communication status information indicating a communication status of a second wireless communication device; and
a control unit that receives the communication status information of the second wireless communication device after the obtainment request has been transmitted, and determines a condition of the radio wave use by the first wireless communication device based on the communication status information of the second wireless communication device.

A network device according to the present disclosure includes:
a receiving unit that receives, from a communication control device that determines a usage condition of radio waves for a first wireless communication device, an obtainment request for communication status information indicating a communication status of a second wireless communication device;
a control unit that monitors communication of the second wireless communication device and generates the communication status information of the second wireless communication device; and
a transmitting unit that, when the obtainment request is received, transmits the communication status information of the second wireless communication device to the communication control device.

A communication control system according to the present disclosure is a communication control system including a communication control device capable of communicating with a management device that manages radio wave use, and a network device connected to a communication network. The communication control device includes:
a receiving unit that receives, from the management device, a request for radio wave use for a first wireless communication device; and
a transmitting unit that, when the request is received, transmits, to the network device, an obtainment request for communication status information indicating a communication status of a second wireless communication device connected to the communication network.

The network device includes:
a receiving unit that receives the obtainment request from the communication control device;
a control unit that monitors communication of the second wireless communication device and generates the communication status information of the second wireless communication device; and
a transmitting unit that, when the obtainment request is received, transmits the communication status information of the second wireless communication device to the communication control device.

The communication control device includes a control unit that receives the communication status information from the network device, and determines a condition of radio wave use by the first wireless communication device based on the communication status information.

A communication control method according to the present disclosure includes: receiving a request for radio wave use for a first wireless communication device; transmitting, when the request is received, an obtainment request for communication status information indicating a communication status of a second wireless communication device; and
receiving the communication status information of the second wireless communication device after the obtainment request has been transmitted, and determining a condition of the radio wave use by the first wireless communication device based on the communication status information of the second wireless communication device.

An information communication method according to the present disclosure includes:
receiving, from a communication control device that determines a usage condition of radio waves for a first wireless communication device, an obtainment request for communication status information indicating a communication status of a second wireless communication device;
monitoring communication of the second wireless communication device and
generating the communication status information of the second wireless communication device; and
transmitting, when the obtainment request is received, the communication status information of the second wireless communication device to the communication control device.

### [Brief Description of Drawings]

[Fig. 1]

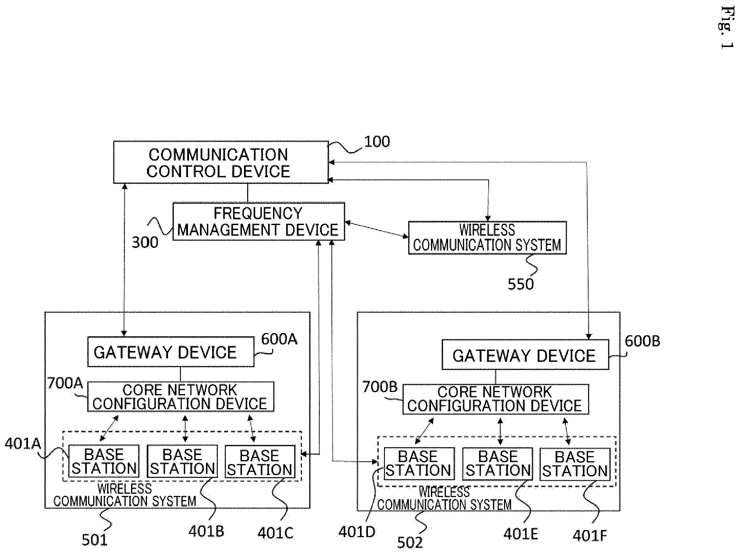

   Fig. 1 is a block diagram illustrating a schematic configuration of a communication control system according to the present disclosure.
[Fig. 2]

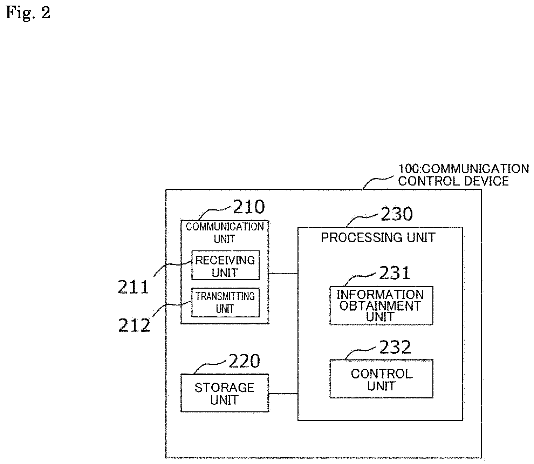

   Fig. 2 is a block diagram illustrating an example of the configuration of a communication control device according to embodiments of the present disclosure.
[Fig. 3]

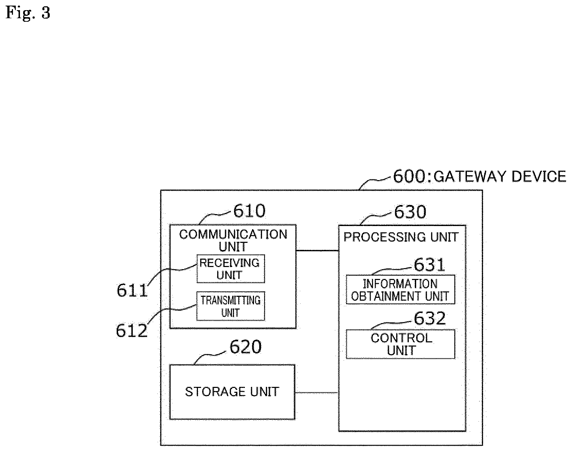

   Fig. 3 is a block diagram illustrating an example of a gateway device according to embodiments of the present disclosure.
[Fig. 4]

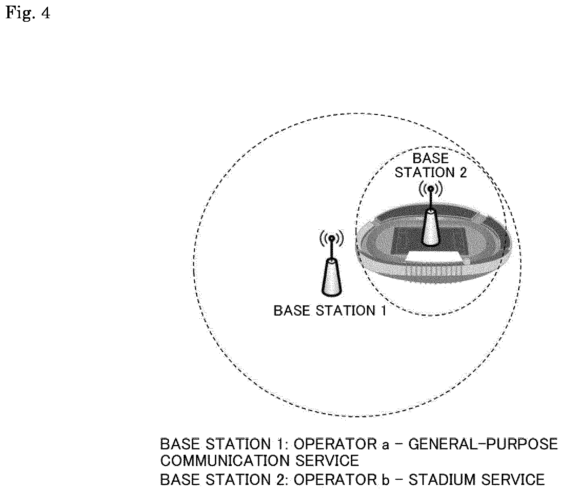

   Fig. 4 is a diagram illustrating an example of two wireless communication systems operated by different operators.
[Fig. 5]

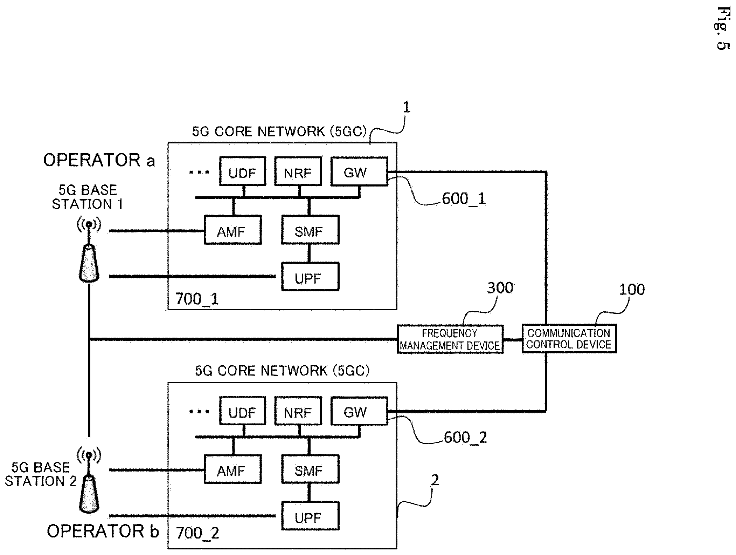

   Fig. 5 is a diagram illustrating an example of the overall configuration of a system according to Specific Example 1.
[Fig. 6]

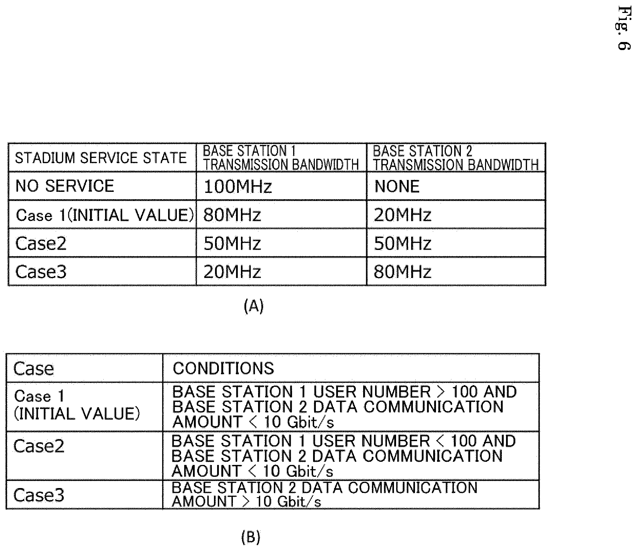

   Fig. 6 is a diagram illustrating coexistence conditions in Specific Example 1.
[Fig. 7]

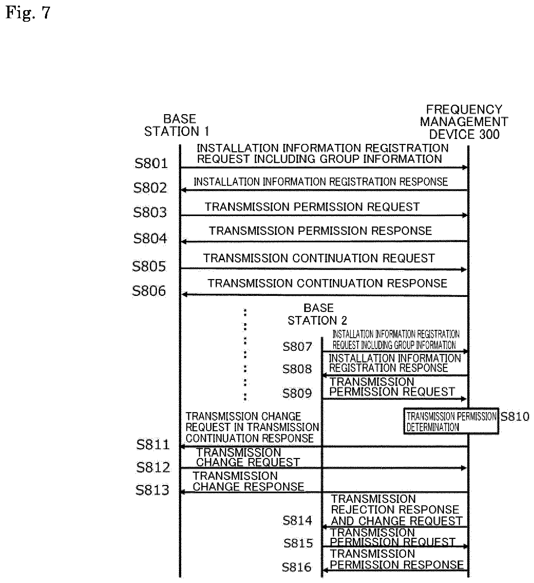

   Fig. 7 is a diagram illustrating a sequence for applying for radio wave or frequency usage permission to a frequency management device.
[Fig. 8]

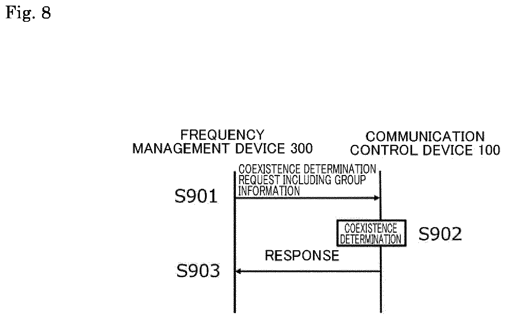

   Fig. 8 is a diagram illustrating an example of a sequence in which a frequency management device makes a request for coexistence determination to a communication control device.
[Fig. 9]

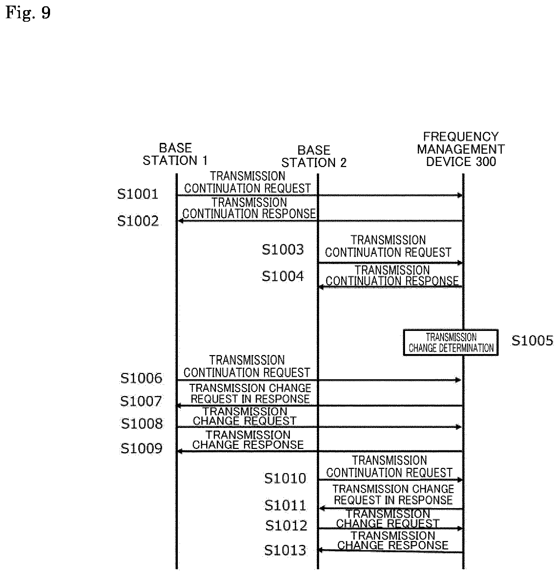

   Fig. 9 is a diagram illustrating an example of a sequence performed between each of base stations and a frequency management device after the start of operation.
[Fig. 10]

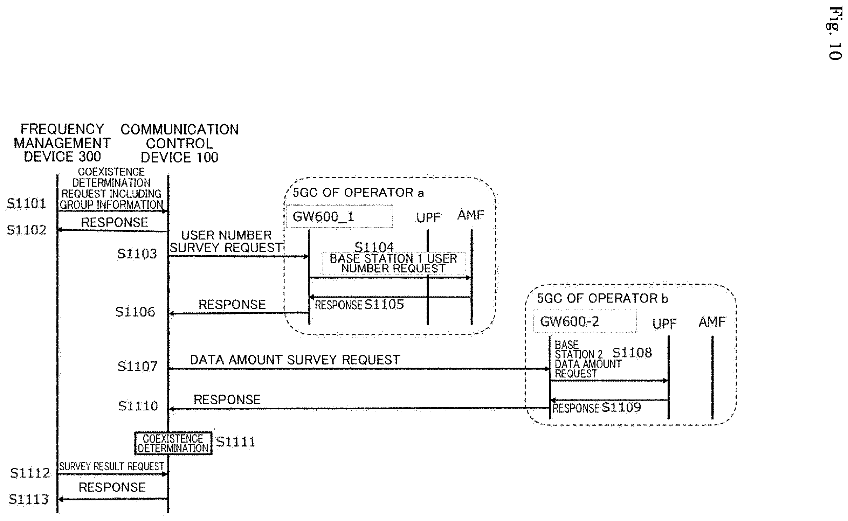

   Fig. 10 is a diagram illustrating an example of a sequence involved in coexistence determination during stadium service operation.
[Fig. 11]

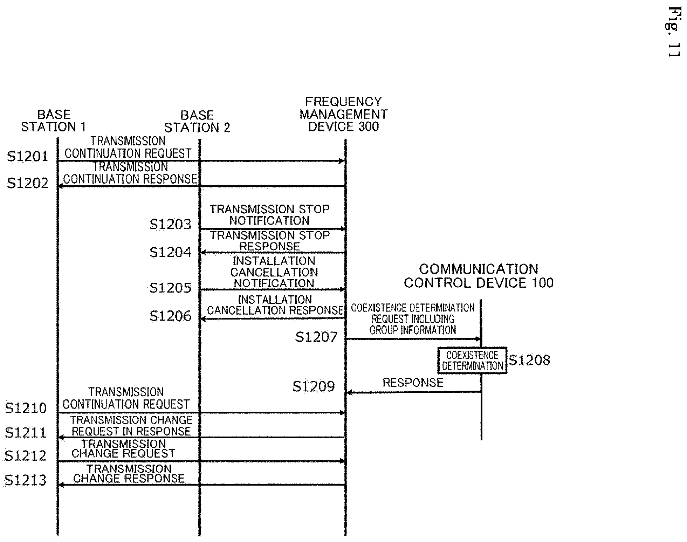

   Fig. 11 is a diagram illustrating an example of a sequence in a case where a stadium service is terminated.
[Fig. 12]

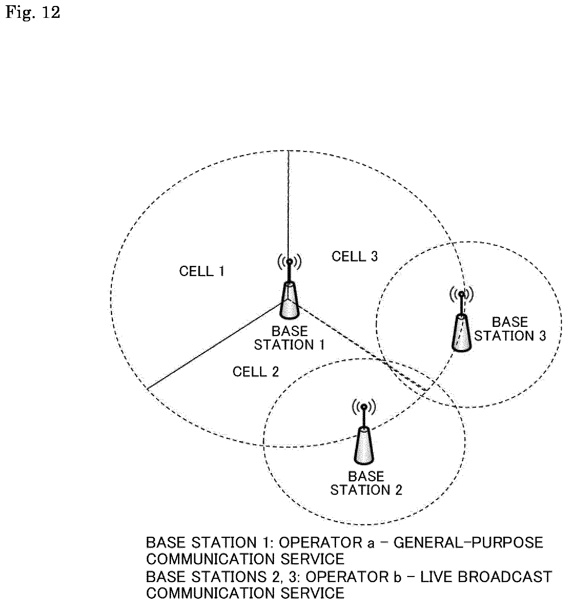

   Fig. 12 is a diagram illustrating an example of two wireless communication systems operated by different operators.
[Fig. 13]

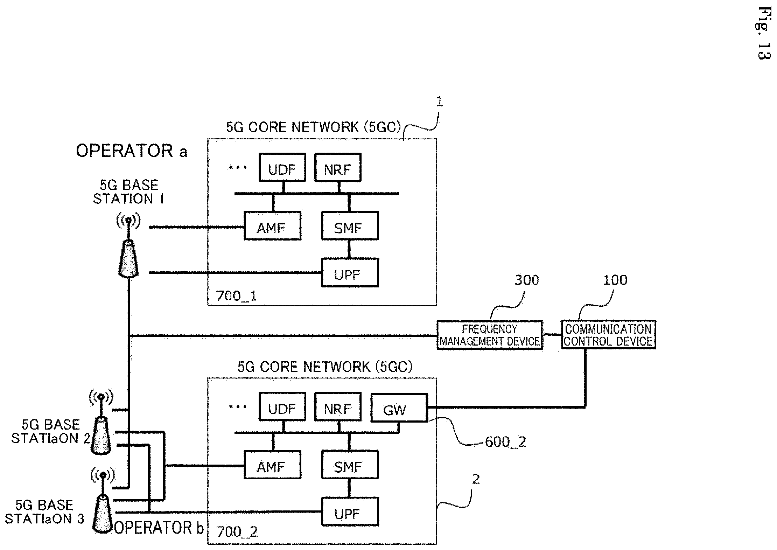

   Fig. 13 is a diagram illustrating an example of the overall configuration of a system according to Specific Example 2.
[Fig. 14]

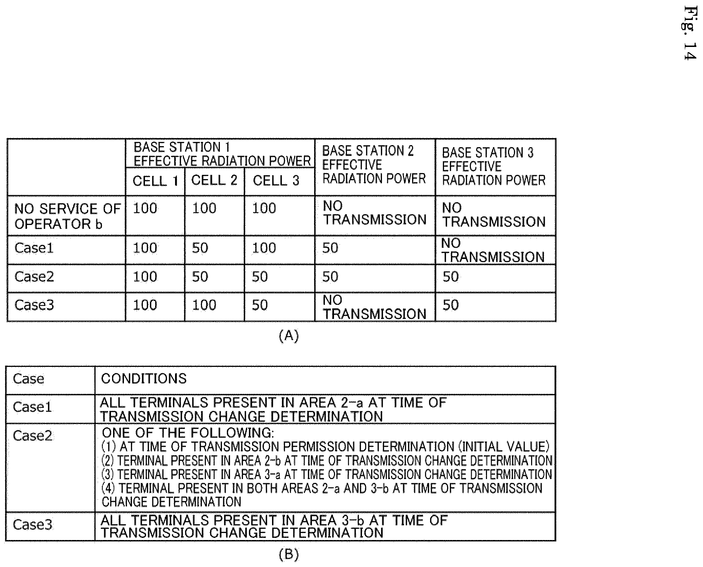

   Fig. 14 is a descriptive diagram illustrating coexistence conditions in Specific Example 2.
[Fig. 15]

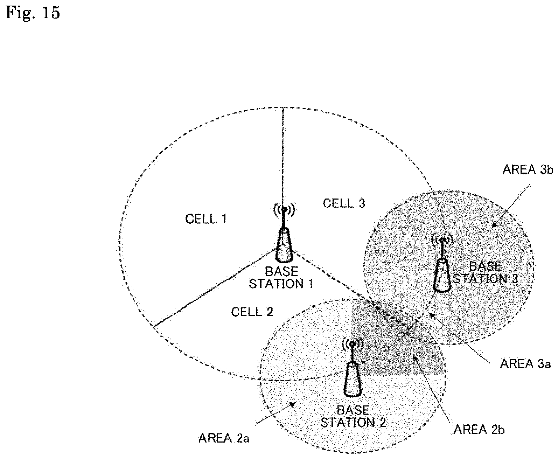

   Fig. 15 is a diagram illustrating each of areas in a cell of a base station.
[Fig. 16]

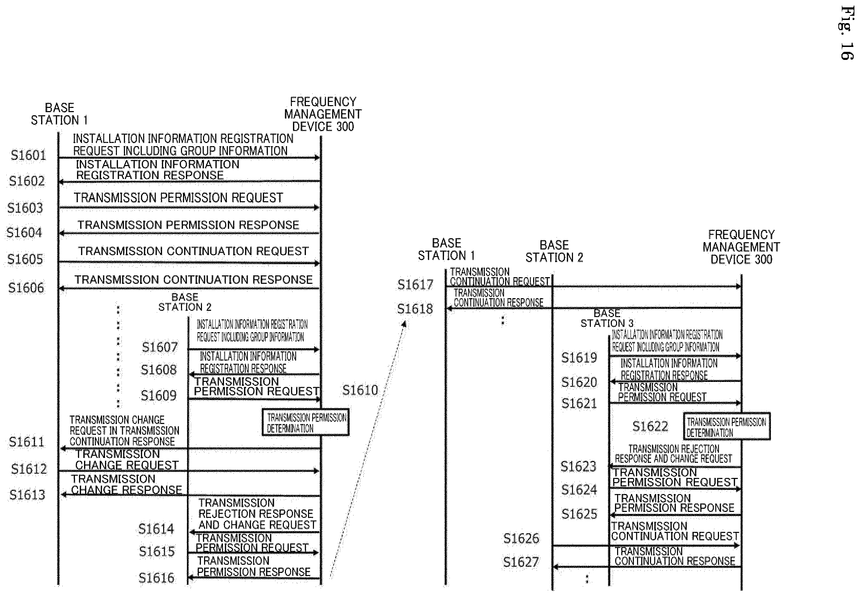

   Fig. 16 is a diagram illustrating a sequence for applying for radio wave usage permission (transmission permission) to a frequency management device.
[Fig. 17]

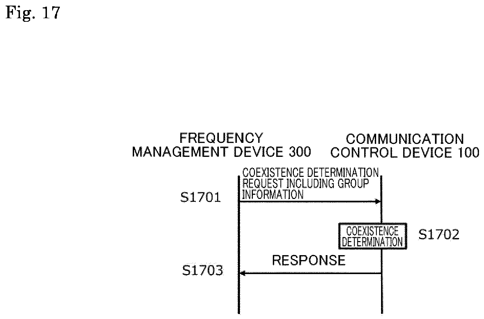

   Fig. 17 is a diagram illustrating an example of a sequence in which a frequency management device makes a request for coexistence determination to a communication control device.
[Fig. 18]

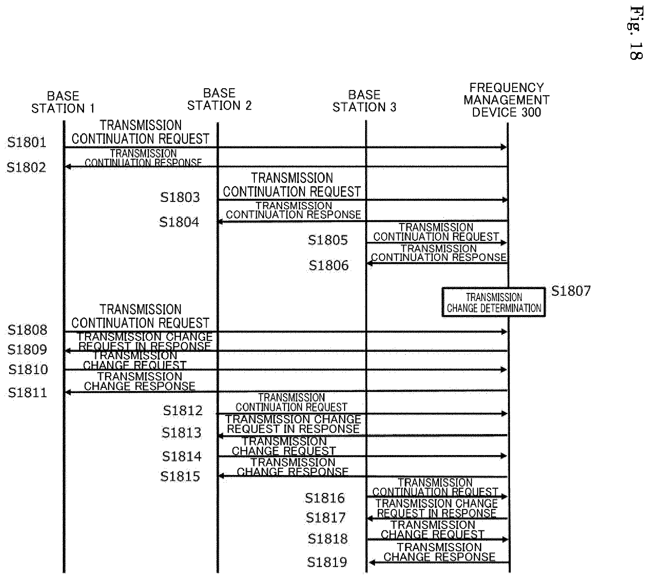

   Fig. 18 is a diagram illustrating an example of a sequence performed during stadium service operation.
[Fig. 19]

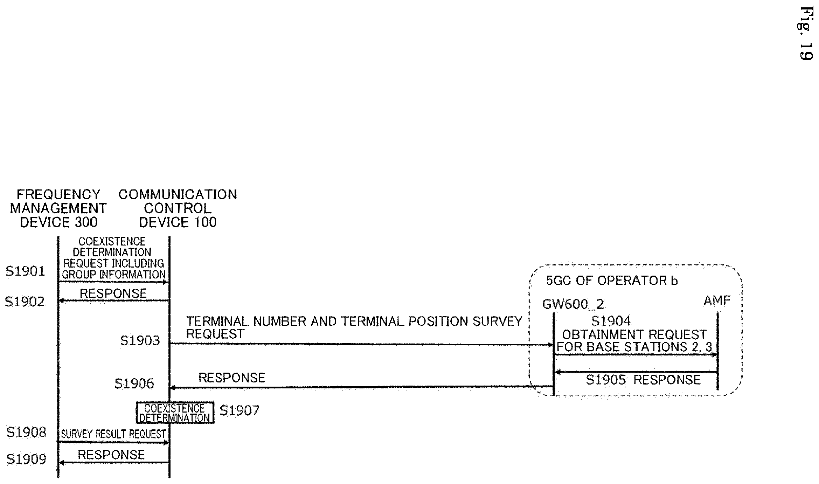

   Fig. 19 is a diagram illustrating an example of a sequence involved in coexistence determination performed by a communication control device during a live service operation.
[Fig. 20]

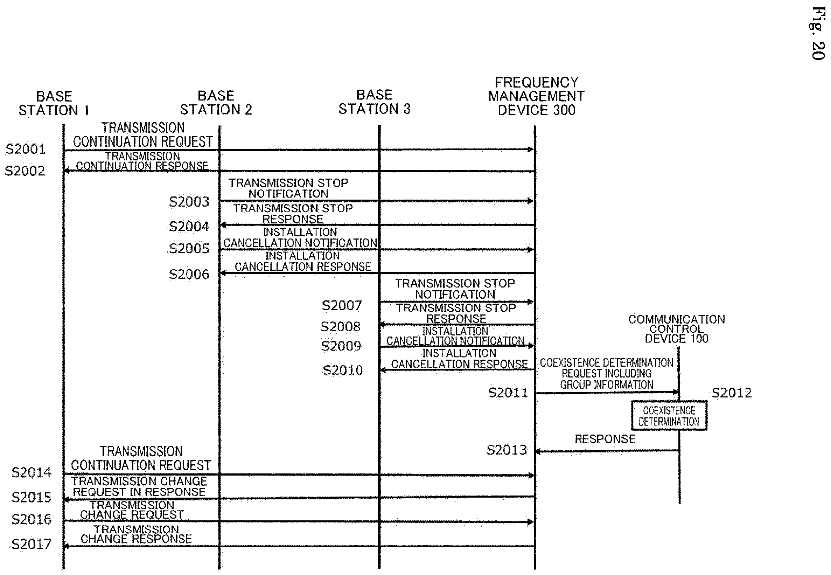

   Fig. 20 is a diagram illustrating an example of a sequence in a case where a live service is terminated.
[Fig. 21]

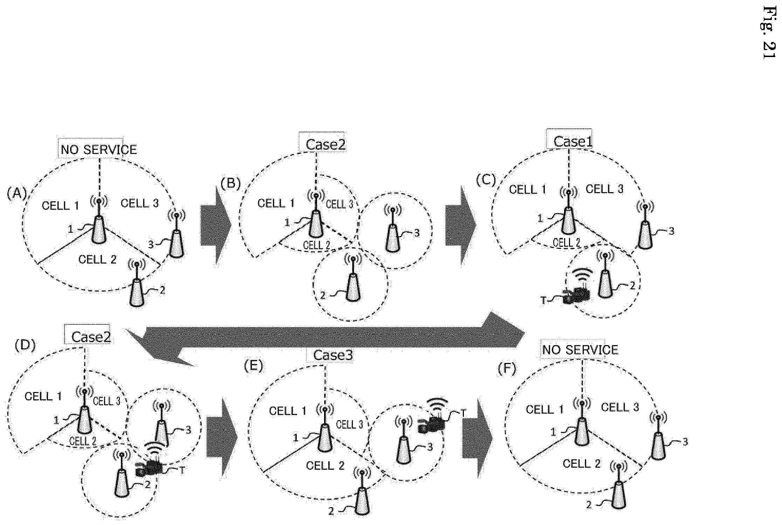

   Fig. 21 is a diagram illustrating an example of a change in the coverage of each of base stations in response to movement of a terminal while a live service is being provided.
[Fig. 22]

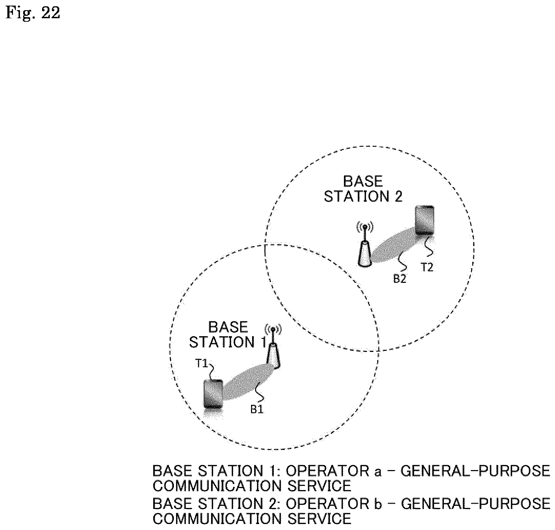

   Fig. 22 is a diagram illustrating an example of two wireless communication systems operated by different operators.
[Fig. 23]

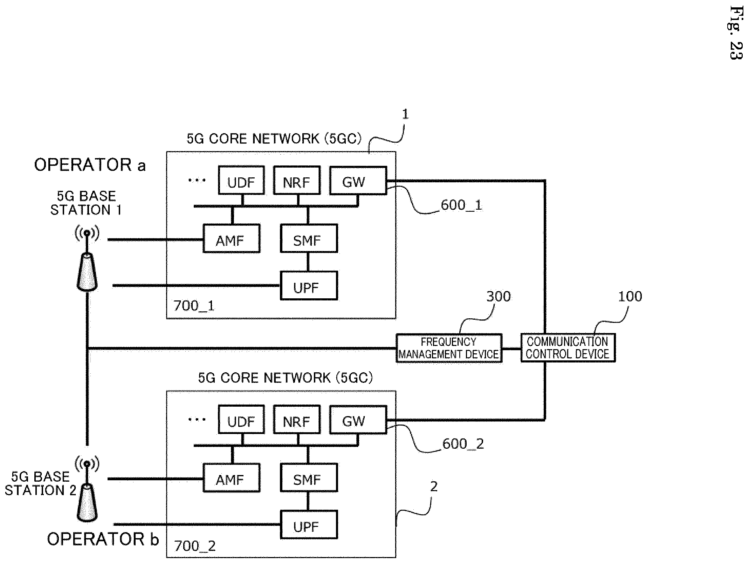

   Fig. 23 is a diagram illustrating an example of the overall configuration of a system according to Specific Example 2.
[Fig. 24]

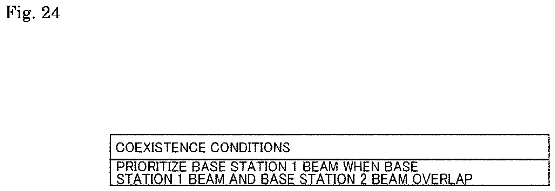

   Fig. 24 is a diagram illustrating coexistence conditions of base stations in Specific Example 2.
[Fig. 25]

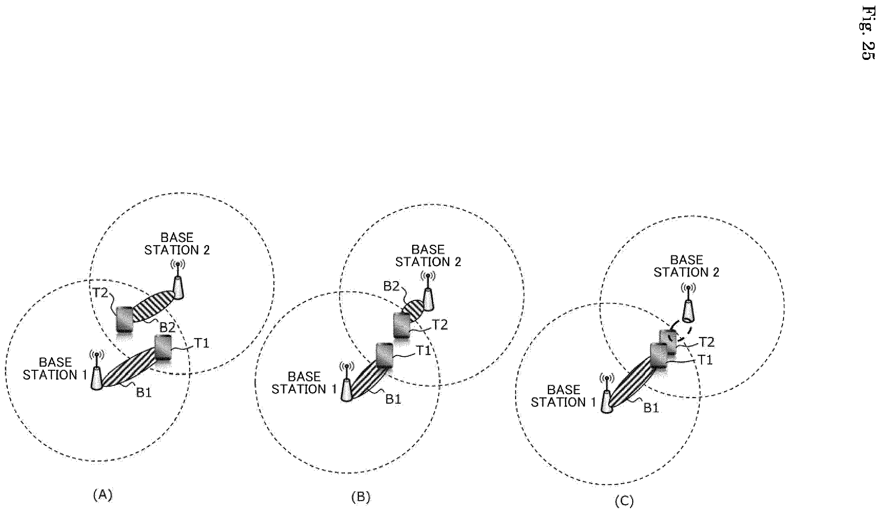

   Fig. 25 is a detailed descriptive diagram of the coexistence conditions in Fig. 24.
[Fig. 26]

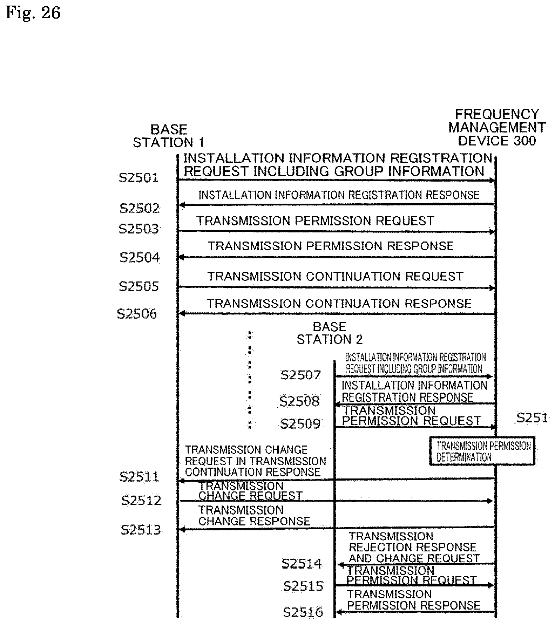

   Fig. 26 is a diagram illustrating a sequence for applying for radio wave or frequency usage permission to a frequency management device.
[Fig. 27]

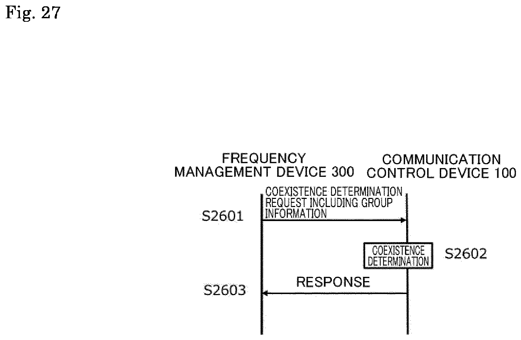

   Fig. 27 is a diagram illustrating an example of a sequence in which a frequency management device makes a request for coexistence determination to a communication control device.
[Fig. 28]

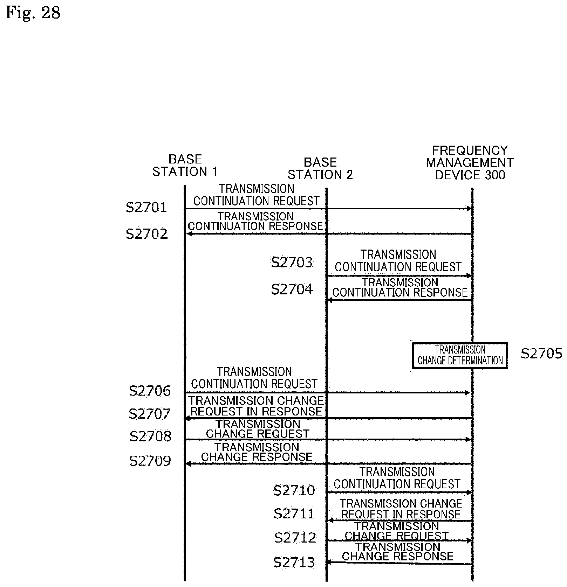

   Fig. 28 is a diagram illustrating an example of a sequence performed between each of base stations and a frequency management device after the start of operation.
[Fig. 29]

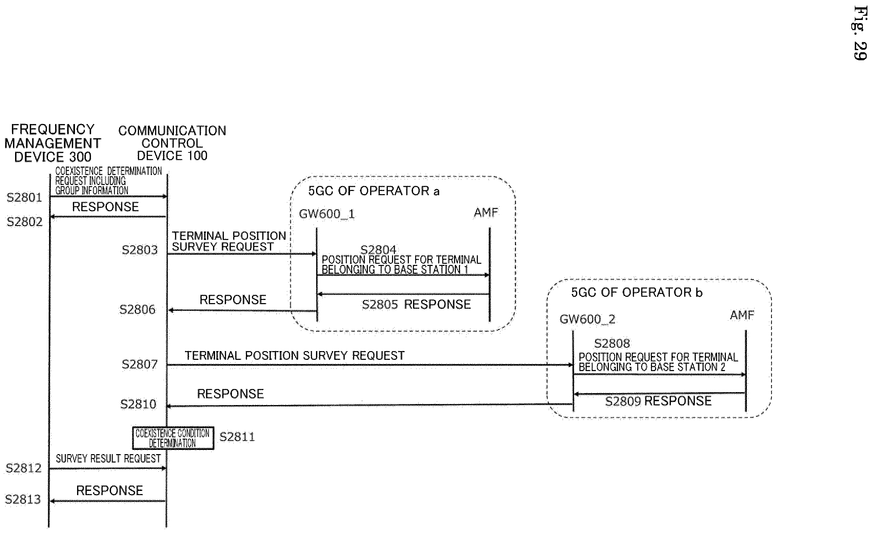

   Fig. 29 is a diagram illustrating an example of a sequence involved in coexistence determination performed by a communication control device during the operation of a service by each of base stations.
[Fig. 30]

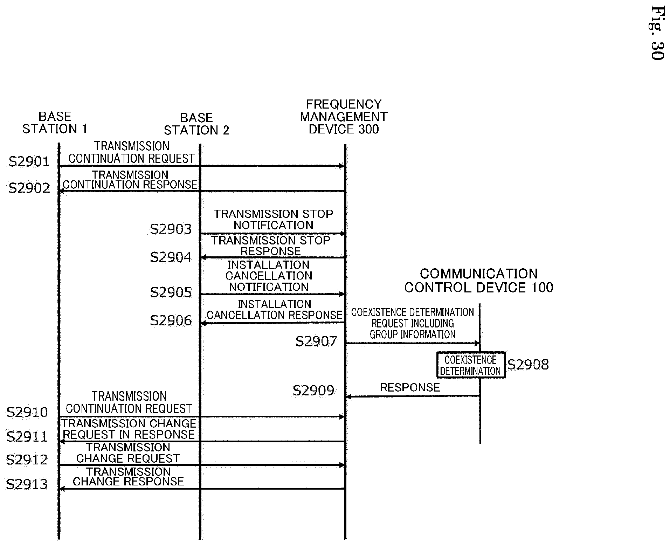

   Fig. 30 is a diagram illustrating an example of a sequence in a case where a service is terminated.

### [Description of Embodiments]

Embodiments of the present disclosure will be described hereinafter with reference to the drawings. In one or more embodiments described in the present disclosure, the elements included in each embodiment can be combined with each other, and the combined result is also part of the embodiments described in the present disclosure.

### [Schematic Configuration of System]

Fig. 1 is a block diagram illustrating a schematic configuration of a communication control system according to the present disclosure.

The communication control system according to the present disclosure includes a communication control device 100, a frequency management device 300, and a plurality of wireless communication systems 501, 502, and 550. Although three wireless communication systems are illustrated in Fig. 1, the number of wireless communication systems may be one, two, or four or more. The wireless communication system 501 includes base stations 401A to 401C, a core network configuration device 700A, and a gateway device 600A, and the wireless communication system 502 includes base stations 401D, 401E, and 401F, a core network configuration device 700B, and a gateway device 600B.

The base stations 401A to 401F are examples of a first wireless communication device or a second wireless communication device according to the present embodiment. However, the wireless communication device according to the present disclosure is not limited to a base station, and may be an access point. Alternatively, the wireless communication device according to the present disclosure may be a terminal device, a device for D2D communication, or a moving relay base station operating as a base station or an access point. Alternatively, the wireless communication device according to the present disclosure may be a CBSD (Citizens Broadband Radio Service Device).

When not distinguishing between individual base stations, a given base station will be referred to as a base station 401. When not distinguishing between individual core network configuration devices, a given core network configuration device will be referred to as a core network configuration device 700. When not distinguishing between individual gateway devices, a given gateway device will be referred to as a gateway device 600.

In Fig. 1, the core network configuration device 700 and the gateway device 600 are illustrated as separate devices, but these devices may be integrated. The gateway device 600 corresponds to a network device according to the present embodiment. Alternatively, a combination of the core network configuration device 700 and the gateway device 600 corresponds to a network device according to the present embodiment.

The wireless communication systems 501 and 502 are operated by different businesses (operators). The number of base stations included in a single wireless communication system may be any number as long as the number is at least one. Each base station 401 uses a frequency band that can be shared between the wireless communication systems 501 and 502 (a shared frequency band) to perform wireless communication with other devices (e.g., terminals under the communication coverage of each base station 401, another base station 401, and the like). The base station 401 can also perform wireless communication with other devices (e.g., terminals and the like) using a frequency band other than the shared frequency band. The wireless communication systems 501 and 502 are, for example, cellular systems. However, the wireless communication systems 501 and 502 are not limited to cellular systems, and may be other types of wireless communication systems. The shared frequency band according to the present embodiment is a frequency band that can be shared between the wireless communication systems 501 and 502, but may be a frequency band that can be shared within the single wireless communication system 501 or 502.

The wireless communication system 550 is a wireless communication system having a priority that is different from those of the wireless communication systems 501 and 502 with respect to the use of the shared frequency band. As an example, the wireless communication system 550 is a wireless communication system having a higher or lower priority than the wireless communication systems 501 and 502. Examples of high-priority wireless communication systems include naval ship radar systems and the like. Examples of low-priority wireless communication systems include systems similar to the wireless communication systems 501 and 502 (e.g., cellular systems or the like). The wireless communication systems 501 and 502 are assumed to be wireless communication systems having the same priority with respect to the use of the shared frequency band.

The frequency management device 300 is a device that manages radio wave use or manages frequency use for the wireless communication systems 501, 502, and 550. As an example, the frequency management device 300 corresponds to, but is not limited to, the SAS (Spectrum Access System) in the CBRS (Citizens Broadband Radio Service). The frequency management device 300 calculates usage conditions for the shared frequency band (e.g., the conditions pertaining to the frequency or transmission power that can be used in the shared frequency band) for the base station 401 (the first wireless communication device) in the frequency band that can be shared between the wireless communication systems 501 and 502 (the shared frequency band). The usage conditions calculated will be referred to as general usage conditions. The shared frequency band includes a plurality of frequencies (shared frequencies or sub-bands) having a relationship such that the frequencies do not interfere with each other, for example, and the plurality of frequencies may be independently selectable. The frequency management device 300 calculates the radio wave usage conditions (the general usage conditions) for the base station 401 based on the usage situation of the shared frequency band of the other base station 401 in the same or another wireless communication system, and the usage situation of the shared frequency band of another type of wireless communication system. The general usage conditions include, as one example, an identifier of a frequency (a shared frequency) that the base station 401 can use, a maximum transmission power value that can be used at that frequency, and the like.

As a specific example, the frequency management device 300 calculates conditions defined according to U.S. frequency sharing, disclosed in NPL 1, as the general usage conditions. However, the frequency management device 300 may calculate the general usage conditions by another method. For example, the general usage conditions may be calculated based on the distance of the base station whose position is identified by longitude and latitude, and the transmission power, at which the same frequency can be shared among the base stations (whether there is no interference).

The frequency management device 300 receives a request pertaining to radio wave use (a radio wave use request) in the shared frequency band from the base station 401. Examples of radio wave use requests include a request to calculate a frequency, a transmission power value, or a beam that can be used in the shared frequency band, and a request to permit the use of a frequency, a transmission power value, or a beam specified by the base station 401 in the shared frequency band. In the latter case, the radio wave use request may include information on the frequency, the transmission power value, or the beam that the base station 401 requests to use.

When the radio wave use request is received by the base station 401, the frequency management device 300 calculates the usage conditions (the general usage conditions) of the shared frequency band for the base station 401 using position information of the base station 401, position information of other base stations 401 in the same and other wireless communication systems, and the like. The frequency management device 300 does not permit a radio wave use request by the base station 401 if the radio wave use request does not meet the general usage conditions between the base station that belongs to a different group than the base station 401 that transmitted the radio wave use request and other types of wireless communication systems (including, for example, a high-priority wireless communication system). The frequency requested by the radio wave use request not being included in the frequency permitted by the general usage conditions can be given as an example of a case where the general usage conditions are not met. In the present embodiment, the base stations 401A to 401F belong to the same group, for example. Although the present embodiment assumes that only that group is present, other groups may be present as well.

If the request of the base station 401 satisfies the general usage conditions between the base station 401 and a different group or the like, but does not satisfy the general usage conditions within the same group, the frequency management device 300 transmits, to the communication control device 100, a request for radio wave use (a coexistence determination request) pertaining to the base station 401. The coexistence determination request includes a request for the base station 401 to calculate a frequency, a transmission power value, a beam, or the like that can be used in the group, using information pertaining to each base station in the group to which the base station 401 belongs. That is, the coexistence determination request includes a request to calculate radio wave usage conditions (coexistence conditions) with the other base stations belonging to the same group as the base station 401. The coexistence conditions include, as one example, an identifier of a frequency (a shared frequency) that the base station 401 can use within the same group, a maximum transmission power value that can be used at that frequency, and the like.

The frequency management device 300 receives a response from the communication control device 100 that includes a determination result (e.g., coexistence conditions including the usable frequency and the like). The frequency management device 300 transmits a response to the request from the base station 401 to the base station 401 based on the general usage conditions and the determination result (the coexistence conditions). The response includes a frequency, a transmission power, a beam, and the like that can be used by the base station 401 (parameter information on the radio waves that can be used by the base station 401). Alternatively, the response includes information such as whether the requested frequency, transmission power, beam, or the like can be used.

If the frequency or the like requested by the base station 401 does not meet the general usage conditions or does not meet the coexistence conditions and the request cannot be permitted, the frequency management device 300 may determine at least one other candidate frequency, transmission power, beam, or the like as an alternative proposal. The determined proposal may be included in the response.

The gateway device 600 (600A, 600B) and the core network configuration device 700 (700A, 700B) are some devices that constitute a core network. Here, the core network in the cellular system is, for example, an EPC (Enhanced Packetized Core) in the LTE system, or a 5GC (5G Core) in 5G.

By communicating with a wireless communication terminal ("terminal" hereinafter) via the base station 401, the core network configuration device 700 monitors the situation of the terminal and provides services in response to requests from the terminal. Here, the service is, for example, a connection to the Internet that is outside the wireless communication system. However, the service may be a data processing service present in the wireless communication system. The terminal is, for example, UE (User Equipment), an IoT terminal, a modem, a smartphone, or the like (the same applies hereinafter).

The gateway device 600 obtains information pertaining to the communication status of the terminal or the base station 401 (communication status information) from the core network configuration device 700. The gateway device 600 transmits the communication status information obtained through the core network configuration device 700 (information obtained by processing the obtained communication status information is also included in the communication status information) to the communication control device 100. Here, the communication status information is, for example, information based on the frequency, the amount of communication data, the location, or the like of the terminal or the base station. Alternatively, the communication status information may be information pertaining to the antennas used by the base station and the terminal, e.g., information on the beams used by the base station or the terminal, or other information.

The gateway device 600 has an API (Application Program Interface) for providing the communication status information obtained through the core network configuration device 700 in response to an inquiry from the communication control device 100. For example, through the API, the gateway device 600 receives a request from the communication control device 100 to obtain information pertaining to the base station 401. When a request for radio wave use for the wireless communication device (the base station 401) is received from the frequency management device 300, for example, the communication control device 100 makes a request, to the gateway device 600, for the provision of the communication status information, through the API. In other words, the communication control device 100 transmits a request for obtainment of the communication status information to the gateway device 600. For example, the communication control device 100 transmits a request to obtain the communication status information pertaining to the base station 401, as well as other base stations 401 (other base stations in the same group as the base station) in the wireless communication system. The communication control device 100 also transmits, through the API, a request to obtain the communication status information pertaining to the terminal that communicates with that base station 401 and terminals that communicate with the other base stations 401. The request to obtain the communication status information pertaining to the base station and the request to obtain the communication status information pertaining to terminals belonging to the base station may be included together in the same request, or may be separate requests.

As described above, in the present embodiment, it is assumed that all base stations included in the wireless communication systems 501 and 502 belong to the same group. The gateway device 600 transmits the obtained communication status information to the communication control device 100 through the API. The communication control device 100 calculates the usage conditions (coexistence conditions) of the radio waves of the base station 401 based on the communication status information received from the gateway device 600. The communication control device 100 transmits information indicating that the frequency, the transmission power, or the like satisfying the coexistence conditions is permitted to be used or to continue to be used to the frequency management device 300.

When a coexistence determination request for the base station 401 is received from the frequency management device 300, the communication control device 100 calculates or determines the coexistence conditions for that base station 401. In order to calculate or determine the coexistence conditions, the communication control device 100 transmits the above-described request to obtain the communication status information to each gateway device 600. The base station for which the communication status information is to be obtained is another base station 401 in the same group as the base station 401. At this time, of the other base stations in the same group, only the base stations belonging to a wireless communication system having an operator different from the operator of the stated base station 401 (the operator of the wireless communication system including the base station 401) may be subject to this obtainment. It is conceivable to use such a method when, for example, the operator can control the interference between the base stations on their own among the base stations operated by the same operator. In this case, the base station may calculate the coexistence conditions only among the different operators.

The communication control device 100 calculates the coexistence conditions based on the communication status information obtained from each gateway device 600, and determines whether the request can be permitted (e.g., whether the requested frequency or the like can be used) based on the coexistence conditions. Additionally, the communication control device 100 may determine, based on the coexistence conditions, a frequency or the like which the other base stations 401 in the same group as the base station 401 can use. The communication control device 100 determines that the requested frequency or the like cannot be used when the frequency or the like requested by the base station 401 does not meet the coexistence conditions. The communication control device 100 transmits a response including the result of the determination (the frequency or the like that can be used, or the information or the like that can be used) to the frequency management device 300. The communication control device 100 may also transmit a response including the calculated coexistence conditions to the frequency management device 300.

If the wireless communication system 550 has a higher priority than the wireless communication systems 501 and 502, the wireless communication systems 501 and 502 are subordinated to the wireless communication system 550 with respect to the use of the shared frequency band. That is, when the high-priority wireless communication system 550 uses a frequency in the shared frequency band (when interference will arise with the frequency), the low-priority wireless communication systems 501 and 502 do not meet the aforementioned general usage conditions and therefore cannot use that frequency. For example, in a situation where a base station belonging to either of the wireless communication systems 501 and 502 is using the frequency first, and the wireless communication system 550 starts using that frequency after, the former base stations must stop using that frequency. On the other hand, if the wireless communication system 550 is a wireless communication system having a lower priority than the wireless communication systems 501 and 502, the wireless communication system 550 is subordinated to the wireless communication systems 501 and 502 with respect to the use of the shared frequency band.

Each gateway device 600 obtains the communication status information based on monitoring the communication of the base station 401 or the terminal by the core network configuration device 700 in response to the request to obtain the communication status information (the inquiry) from the communication control device 100. Specifically, for example, the gateway device 600 obtains the aforementioned communication status information (including information obtained by processing the communication status information) for calculating the coexistence conditions. The gateway device 600 obtains the communication status information of the base station belonging to the same wireless communication system as the gateway device 600 and the terminal that communicates with that base station in response to the obtainment request from the communication control device 100. The base station specified by the communication control device 100 in the obtainment request is a base station that has made a request to use radio waves, or another base station in the same group as that base station. Here, the gateway device 600 may periodically obtain the above-mentioned communication status information from the communication control device 100 in order to prepare for future inquiries (receiving obtainment requests) and store the information in an internal storage unit.

The communication control device 100 and the gateway device 600 (600A and 600B) according to the present disclosure will be described in detail hereinafter.

Fig. 2 is a block diagram illustrating an example of the configuration of the communication control device 100 according to embodiments of the present disclosure. The communication control device 100 includes a communication unit 210, a storage unit 220, and a processing unit 230. The communication unit 210 includes a receiving unit 211 that receives information and a transmitting unit 212 that transmits information. The processing unit 230 includes an information obtainment unit 231 and a control unit 232.

The communication unit 210 transmits and receives information. The communication unit 210 includes a transmitting unit that transmits information and a receiving unit that receives information. The communication unit 210 includes a communication interface for performing wired or wireless communication. When performing wireless communication, the communication unit 210 includes at least one antenna. The communication unit 210 transmits information to other nodes and receives information from other nodes. "Other nodes" include, for example, the frequency management device 300 and the gateway device 600. The communication interface with the frequency management device 300 and the communication interface with the gateway device 600 may be different, or may be the same. The "other nodes" may include a base station.

The storage unit 220 temporarily or permanently stores programs and data for the operation of the communication control device 100. The storage unit 220 is a recording medium such as a memory device, a hard disk, or an optical disk. The device may be a non-volatile memory or a volatile memory.

The processing unit 230 provides various functions of the communication control device 100. The processing unit 230 is connected to the communication unit 210 and the storage unit 220. The processing unit 230 includes the information obtainment unit 231 and the control unit 232. Note that the processing unit 230 may further include elements aside from the information obtainment unit 231 and the control unit 232. In other words, the processing unit 230 can also perform operations other than those of the information obtainment unit 231 and the control unit 232.

### [Information Obtainment Unit 231]

The information obtainment unit 231 obtains, from the gateway device 600, the frequency management device 300, or both, information pertaining to the wireless communication systems (501, 502, and 550), information pertaining to a given base station 401 belonging to the wireless communication system, or information pertaining to a terminal communicating with that base station 401. The terminal may be a terminal that communicates with the base station 401 involved in the coexistence determination request, or may be a terminal that communicates with another base station 401 belonging to the same group as the base station 401 (a first group).

For example, as communication status information pertaining to the base station 401, the information obtainment unit 231 may include information pertaining to the position (e.g., longitude, latitude, and altitude) of the base station 401, information pertaining to the amount of communication data of the base station 401, or parameter information of the beam (information pertaining to the shape of the beam) used by the base station 401.

Additionally, as the communication status information of the terminal that wirelessly communicates with a given base station 401, the information obtainment unit 231 obtains information based on, for example, the position of the terminal (latitude, longitude, and altitude), or information on the distance and direction from the communication base station 401 to the terminal. Additionally, when the coverage of the base station 401 is divided into any number and an ID is assigned to each area obtained from the division, the information of the area ID corresponding to the location where the terminal is communicating may be obtained.

Additionally, as the communication status information of the terminal, the information obtainment unit 231 may obtain information pertaining to the amount of communication data between the terminal and the base station 401. The information pertaining to the amount of communication data is, for example, the total amount of data transmitted or received by at least one of the uplink and downlink through the base station. The total amount may be the sum of the amount of data having a specific priority.

Additionally, the information obtainment unit 231 may obtain the following information as the communication status information.

That is, the information obtainment unit 231 may obtain information pertaining to the antenna of the base station 401 or the terminal (antenna-related information). The antenna-related information may include antenna dimensions, polarization information, the number of antenna elements, the spacing between antenna elements, the antenna size, the antenna orientation, an applicable transmission mode, the beam patterns that can be formed, or the like.

Additionally, the information obtainment unit 231 may obtain information pertaining to a device class of the base station 401 or the terminal. The information pertaining to the device class may indicate a device class, or may indicate parameters such as a maximum transmission power defined by the device class.

Additionally, the information obtainment unit 231 may obtain information pertaining to the priority of the wireless communication system with respect to the use of the shared frequency band. The information pertaining to the priority may indicate the priority.

Additionally, the information obtainment unit 231 may obtain information pertaining to a user type for the wireless communication system. The information pertaining to the user type may indicate the user type. The user type may be a business, an individual, a public entity, or the like.

Additionally, the information obtainment unit 231 may obtain information pertaining to a system type for the wireless communication system. The information pertaining to the system type may indicate the system type. The system type may be DECT (Digital Enhanced Cordless Telecommunications) or a wireless-activated disaster warning system.

Additionally, the information obtainment unit 231 may further obtain other information pertaining to the wireless communication system from the frequency management device 300 or the gateway device 600.

The information obtainment unit 231 may obtain information aside from the above-described information.

The information obtainment unit 231 may use a given base station 401 receiving a coexistence determination request from the frequency management device 300, for example, as the timing for obtaining the communication status information of the base station 401 or the terminal. At this time, the information obtainment unit 231 obtains, for example, the communication status information of that base station 401 and the terminal communicating with that base station 401, and the communication status information of another base station in the same group as that base station 401 and the terminal communicating with the other base station. The destination of the obtainment request is the stated gateway device 600 or frequency management device 300. The coexistence determination request includes, as an example, an inquiry about the frequency, transmission power value, beam, or the like that the base station 401 can use, or an inquiry about whether the frequency, transmission power value, beam, or the like requested by the base station 401 can be used.

### [Control Unit 232]

When a coexistence determination request is received for a given base station 401, the control unit 232 calculates the usage conditions (coexistence conditions) for a shared frequency band within the group of that base station 401. The control unit 232 uses the communication status information of at least one of that base station 401, a terminal that communicates with that base station 401, another base station 401 in the same group, and another base station 401 to calculate the coexistence conditions.

As an example, the coexistence conditions may include information identifying frequencies, in the shared frequency band, that can be used by the base station 401 (identification information). Furthermore, the coexistence conditions may include the transmission power value (e.g., the maximum transmission power value) at which the base station 401 can transmit in the shared frequency band or at the usable frequency. Additionally, the coexistence conditions may include parameter information on the beams that can be used (space that can be used) by the base station 401 for the shared frequency band or the frequency that can be used. The space that can be used is a space in which interference with another base station does not arise even when the reception power of the signal transmitted by the base station 401 at the frequency is at least a predetermined power. The information identifying the usable frequency, transmission power value, usable space (beam or the like) is an example of parameter information on the radio waves that the base station 401 can use.

Additionally, when the base station 401 is configured to cover all directions (360 degrees) using a plurality of antennas (e.g., assuming three directional antennas each having an angular range of 120 degrees), individual use spaces may be configured by independently adjusting the transmission power of the three antennas. In this case, each use space corresponds to a space in which the frequency can be used. Additionally, the base station 401 may configure a space in which the frequency can be used through sharply-directed beam-type transmission, which is realized by using what are known as MIMO antennas constituted by a plurality of antenna elements.

Based on the calculated coexistence conditions, the control unit 232 can determine the frequency, transmission power, beam, or the like that the base station 401 can use, or determine whether the frequency, transmission power, beam, or the like requested by the base station 401 can be used. Additionally, if the frequency or the like requested by the base station 401 cannot be used, the control unit 232 may determine the frequency that can be used by the base station 401 in the group from among other frequencies or the like that are candidates in the shared frequency band. The frequency that can be used, whether the requested frequency can be used, the frequency determined from among the candidates, and the like are examples of usage conditions that satisfy the request from the base station 401, or examples of the parameter information on the radio waves that the base station 401 can use. The control unit 232 transmits a response (an answer) including the result of the determination to the frequency management device 300 through the communication unit 210. The control unit 232 may also transmit information indicating the calculated coexistence conditions to the frequency management device 300.

Examples other than those described above will be described as specific examples for calculating the coexistence conditions. However, the calculation of the coexistence conditions is not limited to the following examples.
It is assumed that the base station belonging to a given wireless communication system (called "base station A") and the base station belonging to another wireless communication system (called "base station B") overlap in terms of the cells (coverage) in a given shared frequency band. In this case, the shared frequency band may be assigned according to the ratio of the amount of communication data, or the number, of the terminals connected to each of the base station A and the base station B. For example, if the shared frequency band has a width of 100 MHz and the ratio of the communication amount is 1:1, the base station belonging to a given wireless communication system using a 50 MHz band and the base station belonging to the other wireless communication system also using a 50 MHz band serves as a sharing condition. If the ratio of the amount of communication data changes, the bandwidth may be changed accordingly (the sharing condition may be changed). As a method for determining a change in the amount of communication data, the amount of communication data at the time of the determination may be used, or the determination may be made based on the amount of communication data used continuously from a given point in the past to the time of the determination.
For example, a given rule, such as an average over the past hour, may be used to make the determination. Alternatively, the determination may be made based on a future amount of communication data predicted based on a past amount of communication data.

Alternatively, the usable frequency (bandwidth) or the like may be calculated as the sharing condition in accordance with the attribute information of the terminals connected to the base station A and the base station B, respectively, or the attribute information of applications used in those terminals or base stations. For example, an application A may have priority over an application B to permit greater bandwidth for the base station using the application A.

Alternatively, the sharing condition may be calculated based on the position information of the terminals under the coverage of the base stations A and B. If a terminal communicating with the base station A is present in an area where the coverages of the base stations A and B overlap, the transmission power may be adjusted to exclude the overlapping part of the coverage of the base station B (i.e., the transmission power of the base station B may be reduced) as the coexistence condition. Assume that the terminal communicating with the base station A then exits the overlapping part, and the terminal communicating with the base station B moves and enters the overlapping part. In this case, the transmission power may be adjusted to exclude the coverage of the base station A from the overlapping part (i.e., the transmission power of the base station A may be reduced), and the transmission power may be adjusted to include the coverage of the base station B in the overlapping part (i.e., the transmission power of the base station B may be increased) as the coexistence condition.

The algorithm for calculating the sharing conditions is executed by the control unit 232 of the communication control device 100 as a processing algorithm upon agreement between the operator of a given wireless system and the operator of another wireless system.

Fig. 3 is a block diagram illustrating an example of a gateway device 600 according to embodiments of the present disclosure. The gateway device 600 includes a communication unit 610, a storage unit 620, and a processing unit 630. The processing unit 630 includes an information obtainment unit 631 and a control unit 632.

The communication unit 610 transmits and receives information. The communication unit 610 includes a receiving unit 611 that receives information and a transmitting unit 612 that transmits information. The communication unit 610 includes a communication interface for performing wired or wireless communication. When performing wireless communication, the communication unit 610 includes at least one antenna. The communication unit 610 transmits information to other nodes and receives information from other nodes. For example, "other nodes" include the communication control device 100 or the core network configuration device 700. The communication interface with the communication control device 100 and the communication interface with the core network configuration device 700 may be different, or may be the same.

The communication unit 610 may receive and execute a data write request or a data read request for the storage unit 620 from the communication control device 100 or another device (e.g., an operating terminal or an input device). In this case, the communication unit 610 transmits a result of processing the write request to the communication control device 100 or the other device, or transmits the read-out data to the device from which the request was made.

The storage unit 620 is a database that temporarily or permanently stores data. The storage unit 620 is a recording medium such as a memory device, a hard disk, or an optical disk. The device may be a non-volatile memory or a volatile memory.

The storage unit 620 temporarily or permanently stores programs and data for the operation of the gateway device 600. The storage unit 620 is a recording medium such as a memory device, a hard disk, or an optical disk. The device may be a non-volatile memory or a volatile memory. The storage unit 620 stores information obtained by the information obtainment unit 631 (communication control information and the like) and processed communication control information.

The processing unit 630 provides various functions of the gateway device 600. The processing unit 630 is connected to the communication unit 610 and the storage unit 620. The processing unit 630 includes the information obtainment unit 631 and the control unit 632. Note that the processing unit 630 may further include elements aside from the information obtainment unit 631 and the control unit 632. In other words, the processing unit 630 can also perform operations other than those of the information obtainment unit 631 and the control unit 632.

The information obtainment unit 631 obtains information pertaining to a given base station 401 and a terminal that communicates with that given base station 401 (communication status information and the like) via the core network configuration device 700 which monitors the communication by the base station 401 and the terminal.

Examples of the communication status information pertaining to the base station are as described above. Other examples of the communication status information pertaining to the base station will be described (the descriptions may partially overlap with those given above). The communication status information may include information pertaining to the number of terminals communicating with the base station 401. The number of terminals may be a number classified for each type of terminal. As yet another example, the information may include information on the wireless method used by the base station 401 to communicate with the terminal, or the wireless method used by the base station 401 to negotiate with the frequency management device 300 (e.g., a request for radio wave use). The wireless method may include, for example, a communication method (time division multiplexing, spatial division multiplexing, frequency division multiplexing, and so on), and detailed settings for that communication method (e.g., in the case of time division multiplexing, the ratio of the time for uplink communication and downlink communication or the like). As another example, the communication status information may be parameter information on the frequency, transmission power value, or beam used by the base station 401. Additionally, the communication status information may include a frequency and a transmission power value or the like that the base station requests the frequency management device 300 for use.

The communication status information pertaining to the base station 401 is not limited to the examples described above. For example, the communication status information may include the position information of the base station 401 and the antenna-related information described above.

The information obtainment unit 631 obtains information pertaining to the terminal (communication status information and the like) via the core network configuration device 700. Examples of the communication status information pertaining to the terminal are as described above. Other examples of the communication status information pertaining to the terminal will be described (the descriptions may partially overlap with those given above).

The specific examples described above (position information, distance to the base station, direction, and the like) can be given as examples of the communication status information on the terminal. Furthermore, the communication status information may include the amount of data per unit of time or a history of the amount of data communicated by the terminal with the base station (i.e., a current or past amount of data). The amount of data may be an amount of data classified for each type of data (uplink, downlink, control information, and communication priority).

The above-described communication status information pertaining to the terminal is not limited to the examples described above, and may be information aside from the examples described above.

The information obtainment unit 631 obtains information such as the communication status information pertaining to the base station and the terminal described above at, for example, set periods of time, and stores the obtained information in the storage unit 620.

### [Control Unit 632]

The control unit 632 processes the communication status information obtained by the information obtainment unit 631. Such processed communication status information is also included in the communication status information according to the present embodiment. The control unit 632 stores the processed communication status information in the storage unit 620. The control unit 632 processes the communication status information in accordance with the type of request assumed as the request to obtain information from the communication control device 100. The processing may be performed in advance according to each type of request before receiving the request. This makes it possible to respond to the request immediately when the request is received. An example of processing the communication status information will be given below.

For example, the control unit 632 may calculate a value over the past 24 hours, a value over the past hour, a current value, a predicted value for the next hour, a predicted value for the next 24 hours, or the like with respect to the number (quantity) of terminals communicating with the base station 401, and store the value in the storage unit 620. Which predicted value is required from among these different types of times may be determined according to the type of the terminal.

The amount of communication data communicated by the terminal with the base station 401 may be calculated with respect to information on, for example, the time (past, present, future), the terminal type, the application type, and the priority of the communication, respectively, and stored in the storage unit 620. For example, the amount of communication data is measured for each application type and stored in the storage unit 620.

Additionally, the position information of the terminal communicating with the base station 401 may be calculated with respect to, for example, the time (past, present, future), the terminal type, and the application type, respectively, and stored in the storage unit 620. One specific example is a "heat map in the coverage of a base station as a prediction of the positions of all terminals over the next 24 hours". The heat map may represent a distribution of the probability that a terminal is present at each location within the coverage of the base station, for example. The probabilities may be distinguished by color.

In processing the communication status information, the control unit 632 may perform the processing in such a manner that the communication control device 100 cannot identify the individual information of the terminals. For example, if a surveillance camera (an IoT terminal) that is always in the same position is transmitting video data, the communication control device 100 may be able to infer that the terminal is a surveillance camera from information received from the gateway device 600. Accordingly, communication control information including, for example, deliberately random error (e.g., intentionally changing the position information at random times), may be transmitted to the communication control device 100 such that the individual information of the terminal cannot be easily inferred.

Specific examples of the configurations and operations in the present embodiment will be described in detail hereinafter.

### (Specific Example 1)

The group in Specific Example 1 includes a plurality of base stations (wireless communication devices) belonging to a plurality of wireless communication systems of equal priority. The plurality of wireless communication systems are operated by different operators. The plurality of base stations may be disposed at different desired heights, for example. Note that the plurality of base stations may be disposed at different heights within a set area. As a specific example, the plurality of base stations may be disposed on different floors of a building, or on the roofs of a plurality of houses of different heights, or may be disposed at different heights on one or more utility poles.

Fig. 4 illustrates an example of two wireless communication systems operated by different operators. One wireless communication system is operated by an operator a and includes a base station 1. The base station 1 provides a general-purpose communication service. Here, the "general-purpose communication service" is, for example, a telephone service or an Internet connection service.

The other wireless communication system is operated by an operator b and includes a base station 2. The base station 2 provides a specialized communication service within a stadium (= stadium service). The "stadium service" is, for example, a local data provision service for event participants in the stadium, or a high-quality communication service for broadcasting live events outside the stadium.

The base station 1 of the operator a basically provides services at all times after the base station 1 is installed. On the other hand, the base station 2 of the operator b does not always provide the service after the installation of the base station 2, but basically only provides the service when an event is being held in the stadium. As an example, the wireless communication system of the operator a corresponds to the wireless communication system 501 illustrated in Fig. 1, and the wireless communication system of the operator b corresponds to the wireless communication system 502 illustrated in Fig. 1 (the number of base stations is different, however).

The general-purpose communication service and the stadium service can coexist using frequency bands which at least partially overlap or interfere with each other. In the present embodiment, the same frequency band (the shared frequency band) is used in both services. Dividing the shared frequency band, for example, enables both services to be implemented at the same time without interfering with each other. Dividing the shared frequency band may also include a form in which the two services select and use different frequencies when the shared frequency band includes a plurality of frequencies that are orthogonal to (do not interfere with) each other. If one service is not in operation, the other service can use the entire shared frequency band.

Fig. 5 illustrates an example of the overall configuration of the system according to Specific Example 1. The wireless communication system of the general-purpose communication service operated by the operator a is a cellular system, and includes 5GC_1 as a core network. The wireless communication system of the stadium service operated by the operator b is a cellular system, and includes 5GC_2 as a core network.

5GC_1 includes a configuration in which a core network configuration device 700_1 and a gateway device 600_1 are integrated as the network device according to the present embodiment. The gateway device 600_1 has a role as a gateway function, which is a new network function (NF) of 5GC_1, and is indicated by "GW 600_1". The core network configuration device 700_1 is connected to the base station 1. The GW 600_1 is connected to a new EN (= Entity) corresponding to the communication control device 100 as NF1 (= Network Function 1).

5GC_2 includes a configuration in which a core network configuration device 700_2 and a gateway device 600_2 are integrated as the network device according to the present embodiment. The gateway device 600_2 has a role as a gateway function, which is a new network function (NF) of 5GC_2, and is indicated by "GW 600_2". The core network configuration device 700_2 is connected to the base station 2. The GW 600_2 is connected to a new EN (= Entity) corresponding to the communication control device 100 as NF2 (= Network Function 2), in the same manner as NF1.

The base station 1 and the base station 2 are wired or wirelessly connected to the frequency management device 300.

5GC_1 of the general-purpose communication service and 5GC_2 of the specialized communication service in the stadium are connected to the communication control device 100.

Fig. 6(A) illustrates an example of the coexistence conditions (radio wave usage conditions) of the base station 1 and the base station 2 in this specific example. The coexistence condition is a frequency usage condition (radio wave usage condition) to enable the base station 1 and the base station 2 to provide services simultaneously. The coexistence conditions in Fig. 6(A) are stored in the storage unit 220 of the communication control device 100 in table format. The storage unit 220 also stores identification information of the group to which each base station belongs. The usable transmission bandwidths (frequency bandwidths) of the base station 1 and the base station 2 according to the implementation status of the stadium service are illustrated here. The shared frequency band is 100 MHz.

If the stadium service is not being implemented, the system of the operator b (the base station 2 and the like) is stopped. At this time, the entire 100 MHz shared frequency band can be allocated (permitted) to the base station 1 (or the operator a). For example, the operator a can use the entire 100 MHz to provide the communication service by the base station 1.

When the stadium service is being provided, the transmission bandwidths that can be allocated to the base station 1 and the base station 2 are controlled according to three cases (Case 1, Case 2, and Case 3). In Case 1, 80 MHz of transmission bandwidth can be allocated to the base station 1, and 20 MHz can be allocated to the base station 2. In Case 2, 50 MHz of transmission bandwidth can be allocated to the base station 1, and 50 MHz can be allocated to the base station 2. In Case 3, 20 MHz of transmission bandwidth can be allocated to the base station 1, and 80 MHz can be allocated to the base station 2.

Fig. 6(B) illustrates the definitions of Case 1 to Case 3. The initial state is Case 1. In this specific example, the cases transition among Case 1 to Case 3 in accordance with the number of users of the general-purpose communication service (the number of users of the base station 1) and the amount of communication data in the stadium service (the amount of communication data of the base station 2).

Fig. 7 illustrates a sequence in which the base station 1 and the base station 2 apply to the frequency management device 300 for permission to use radio waves or frequencies when the base station 1 and the base station 2 start their respective services.

The base station 1 transmits, to the frequency management device 300, a request to register the base station 1 in the frequency management device 300 (an installation information registration request) (S801). The installation registration request is made, for example, when the base station 1 is newly installed. The installation information registration request includes information pertaining to the base station 1. The information pertaining to the base station includes, for example, an identifier of the base station 1, position information of the base station 1, spec information of the base station 1, group information on the group to which the base station 1 belongs, and so on.

The frequency management device 300 transmits, to the base station 1, a response indicating that the registration in the frequency management device 300 is complete (an installation information registration response) (S802). The frequency management device 300 may determine whether to permit the registration based on an installation location of the base station 1 or the like. For example, whether to permit the registration may be determined based on a geographical positional relationship with another registered base station.

The base station 1 transmits a frequency usage permission request (a transmission permission request) to the frequency management device 300 (S803). The transmission permission request includes information related to the frequency requested for use, e.g., the frequency requested for use (the transmission frequency) and the transmission power value. The frequency requested for use may be the entire shared frequency band. This example assumes that the frequency requested for use is the entire shared frequency band.

The frequency management device 300 calculates the general usage conditions for radio wave use based on the information included in the transmission permission request, and permits the use of the requested frequency and the like when the general usage conditions are met. At this point in time, there are no high-priority systems using the shared frequency band, no base stations belonging to another group using the shared frequency band, and furthermore, no other base stations in the same group that are using the shared frequency band. Accordingly, a condition that the entire shared frequency band can be used is calculated as the general usage condition. The frequency management device 300 determines that the requested frequency (in this example, the entire shared frequency band) meets the general usage conditions and that that frequency can be used. The frequency management device 300 transmits a response permitting the use of the frequency and the like (a transmission permission response or a usage permission response) (S804). The base station 1 starts transmission (the service) at the frequency and the like permitted by the transmission permission response. Then, the base station 1 periodically transmits a request for continuous use of the frequency (a transmission continuation request or a continuous use request) to the frequency management device 300 (S805). The frequency management device 300 transmits a response permitting the continuous use (a transmission continuation response or a continuous use response) to the base station 1 as long as the general usage conditions are met (S806).

After the operator a starts the service using the base station 1, the operator b transmits an installation information registration request from the base station 2 to the frequency management device 300 to start the stadium service using the base station 2 (S807). The installation information registration request is a request to register the base station 2 in the frequency management device 300. Note that the base station 2 may be installed after the service of the base station 1 is started, or may be installed before the service of the base station 1 is started.

The installation information registration request includes information pertaining to the base station 2. The information pertaining to the base station includes, for example, an identifier of the base station 2, position information of the base station 2, spec information of the base station 2, group information on the group to which the base station 2 belongs, and so on.

The frequency management device 300 transmits, to the base station 2, a response indicating that the registration in the frequency management device 300 is complete (an installation information registration response) (S808). The frequency management device 300 may determine whether to permit the registration based on an installation location of the base station 2 or the like. For example, whether to permit the registration may be determined based on a geographical positional relationship with another registered base station.

The base station 2 requests transmission permission from the frequency management device 300 (S809). The transmission permission request includes information related to the frequency requested for use, e.g., the frequency requested for use (the transmission frequency) and the transmission power value. This example assumes that the frequency requested for use is the entire shared frequency band.

The frequency management device 300 calculates the general usage conditions for radio wave use based on the information included in the transmission permission request, and permits the use of the requested frequency and the like when the general usage conditions are met. Here, there are no high-priority systems using the shared frequency band and no base stations belonging to another group using the shared frequency band, but there is a base station in the same group using the shared frequency band (the base station 1). Accordingly, the general usage conditions are not met, and the frequency management device 300 transmits, to the communication control device 100, a request to calculate the conditions for the base station 2 to be capable of coexisting (the coexistence conditions) with the base station 1 (the coexistence determination request). The frequency management device 300 then determines the frequencies for the base station 2 and the base station 1 to use based on a response (an answer) including the result of the coexistence determination from the communication control device 100 (S810). Requesting the communication control device 100 to calculate the coexistence conditions and determining the frequencies that can be used based on the response from the communication control device 100 in this manner is called a "coexistence permission determination" or a "transmission permission determination". The coexistence determination request includes, as one example, the frequency, the transmission power value, and the like requested for use by the base station 2, and the frequency, the transmission power value, and the like being used by the base station 1.

Fig. 8 is a diagram illustrating an example of a sequence in which the frequency management device 300 makes a request for the coexistence determination to the communication control device 100. The frequency management device 300 transmits the coexistence determination request to the communication control device 100 (S901). The control unit 232 of the communication control device 100 makes the coexistence determination for the base station 1 and the base station 2 based on the coexistence conditions of the groups to which the base station 1 and the base station 2 belong. For example, if the frequency that the base station 2 is requesting to use does not interfere with the frequency used by the base station 1 in the same group used in the shared frequency band, the frequency requested by the base station 2 is permitted (S902). In other words, if a frequency other than the frequency used by the base station 1 is set as the usage condition, and the frequency requested by the base station 2 is included in that usage condition, the frequency requested by the base station 2 is permitted. The communication control device 100 transmits a response (an answer) including information permitting the frequency or the like requested by the base station 2 to the frequency management device 300 (S903).

On the other hand, if the frequency requested by the base station 2 interferes with the frequency used by the base station 1, the control unit 232 of the communication control device 100 determines the frequencies and the like that the base station 1 and the base station 2 can use based on the coexistence conditions (the same S902). The control unit 232 transmits a response (an answer) including information permitting the determined frequency or the like to be used, for at least the base station 2 among the base station 1 and the base station 2, to the frequency management device 300 (S903).

A specific example will be described using the example described with reference to Fig. 6 above. For example, at the time when the base station 2 is about to start the service (when the service had not yet been started), the base station 1 was using the entire shared frequency band (a band of 100 MHz), and it is therefore necessary to shift to Case 1, which is the initial value. Accordingly, the control unit 232 of the communication control device 100 determines to set the frequency for the base station 1 to 80 MHz and the frequency for the base station 2 to 20 MHz, and transmits the response including the details of the determination to the frequency management device 300.

If it is necessary to change the frequency for the base station 1, the frequency management device 300 transmits a frequency change request (a transmission change request) in response to the transmission continuation request (S811). The transmission change request includes the frequency for which the change is requested (a band of 80 MHz, in the above example). The base station 1 transmits the change request (the transmission change request) including the post-change frequency to the frequency management device 300 (S812), and the frequency management device 300 transmits a response (a transmission change response) that permits the use of the post-change frequency to the base station 1 (S813). Thereafter, the base station 1 transmits at the post-change frequency (a band of 80 MHz).

If the frequency management device 300 permits a change in a frequency different from the frequency requested by the base station 2 (if the frequency requested by the base station 2 cannot be permitted), a transmission rejection response and a frequency change request are transmitted as a response to the transmission permission request received in S809 (S814). The transmission change request includes the frequency for which the change is requested (a band of 20 MHz, in the above example). The base station 2 transmits the transmission permission request (the usage permission request) including the frequency for which the change has been requested to the frequency management device 300 (S815), and the frequency management device 300 transmits a response (the transmission permission response) that permits the use of that frequency to the base station 2 (S816). Thereafter, the base station 2 transmits at the permitted frequency (a band of 20 MHz).

Fig. 9 illustrates an example of a sequence performed among the base station 1, the base station 2, and the frequency management device 300 after the start of operation. The base station 1 and the base station 2 have already started the services, i.e., radio waves are being transmitted. The base station 1 and the base station 2 periodically transmit the transmission continuation request to the frequency management device 300 (S1001, S1003). The frequency management device 300 transmits the transmission continuation response indicating permission to continue transmission to the base station 1 and the base station 2 as long as the general usage conditions are met for base stations or systems outside the group (S1002, S1004). The processing of steps S1001 and S1002 is repeated at regular intervals, and the processing of steps S1003 and S1004 is repeated at regular intervals. The frequency management device 300 transmits, to the communication control device 100, the coexistence determination request requesting the coexistence determination for the base station 1 and the base station 2, as a transmission change determination (S1005) at a predetermined timing (S1005). The predetermined timing is, for example, the timing at which the transmission continuation request has been received from one of the base stations, the timing at which a set period of time has passed since the previous coexistence determination, or the like. Here, the coexistence determination includes, for example, a determination as to whether it is necessary for the base station 1 and the base station 2 to change the frequencies used from the current frequencies. As an example, the coexistence determination request may include group information on the groups to which the base station 1 and the base station 2 belong. As a response to the coexistence determination request, the frequency management device 300 does nothing upon receiving a response (an answer) from the communication control device 100 indicating that the frequencies of the base station 1 and the base station 2 are not to be changed.

On the other hand, if a response including an indication that the frequencies of the base station 1 and the base station 2 are to be changed and the post-change frequency is received from the communication control device 100, the frequency management device 300 transmits a transmission change request in response to the transmission continuation request received from the base station 1 and the base station 2 (S1006, S1007, S1010, S1011). The transmission change request makes a request to change the frequency to be used to the post-change frequency. The base station 1 and the base station 2 transmit a request including the frequency for which the change has been requested (a transmission change request) to the frequency management device 300 (S1008, S1012). The frequency management device 300 transmits a response permitting the change to the frequency (a transmission change response) to the base station 1 and the base station 2 (S1009, S1013). Thereafter, the base station 1 and the base station 2 each transmit at the frequency for which the change has been permitted.

Fig. 10 illustrates an example of a sequence performed among the communication control device 100, 5GC_1, 5GC_2, and the frequency management device 300, involved in the coexistence determination made by the communication control device 100 during the operation of the stadium service.

Upon receiving the coexistence determination request (a radio wave use request) from the frequency management device 300 (S1101), the communication control device 100 transmits a receipt confirmation response to the frequency management device 300 (S1102). Based on the coexistence determination request, the communication control device 100 obtains the information necessary for the coexistence determination from the GW 600_1 of 5GC_1 and the GW 600_2 of 5GC_2.

Specifically, after the coexistence determination request is received from the frequency management device 300, the communication control device 100 transmits a request to survey of the number of users of the base station 1 (a user number survey request) to the GW 600_1 of 5GC_1 as information necessary for the coexistence determination (S1103). The user number survey request is an example of a request to obtain the communication status information pertaining to the base station 1. The communication control device 100 also transmits a request to survey the amount of communication data of the base station 2 (a data amount survey request) to the GW 600_2 of 5GC_2 (S1107). The user number survey request is an example of a request to obtain the communication status information pertaining to the base station 2.

Upon receiving the user number survey request from the communication control device 100, the GW 600_1 of 5GC_1 transmits a user number obtainment request (a user number request) to an AMF that manages user number information of the base station 1 (S1104). The AMF is part of the elements constituting the core network configuration device 700_1. Upon obtaining the response including the user number information from the AMF (S1105), the GW 600_1 of 5GC_1 processes the user number information according to the type of the user number survey request, and transmits a response including the processed information (S1106). Examples of the processed information include an average number of users, a maximum number of users, or the like over a set period of time. Examples of processing the information are as described above.

Here, the user number request is provided when the user number survey request is received, but the user number information may be obtained by providing the user number request periodically or at another timing regardless of whether the user number survey request is received. The obtained information may then be processed in advance in accordance with variation in the type of the user number survey request, and stored in the storage unit 620. This makes it possible to respond to the user number survey request immediately.

When the data amount survey request is received from the communication control device 100, the GW 600_2 of 5GC_2 transmits a data amount obtainment request (a data amount request) to a UPF that manages data amount information of the base station 2 (S1108). The UPF is part of the elements constituting the core network configuration device 700_1. Upon obtaining the response including the data amount information from the UPF (S1109), the GW 600_2 of 5GC_2 processes the data amount information according to the type of the user number survey request, and transmits a response including the processed information (S1110). Examples of the processed information include an average data amount, a maximum data amount, or the like over a set period of time. Examples of processing the information are as described above. Here, the data amount request is provided when the data amount survey request is received, but the data amount information may be obtained by providing the data amount request periodically or at another timing regardless of whether the data amount survey request is received. The obtained information may then be processed in advance in accordance with variation in the type of the data amount survey request, and stored in the storage unit 620. Note that when querying the UPF for the data amount, the GW 600_2 of 5GC_2 may indirectly query the UPF through an SMF, which is an Entity of another 5GC.

The communication control device 100 makes the coexistence determination for the base station 1 and the base station 2 based on the information obtained from the GW 600_1 and the GW 600_2. For example, if the case currently applied is Case 1, illustrated in Fig. 6(B), and the obtained information matches Case 2 illustrated in Fig. 6(B), a determination is made to change the frequencies of the base station 1 and the base station 2 to the bandwidths corresponding to Case 2. In other words, a determination is made to change the frequency of the base station 1 from a band of 80 MHz to a band of 50 MHz, and to change the frequency of the base station 2 from a band of 20 MHz to a band of 50 MHz. As another example, if the case currently applied is Case 2, illustrated in Fig. 6(B), and the obtained information matches Case 3 illustrated in Fig. 6(B), a determination is made to change the frequencies of the base station 1 and the base station 2 to the bandwidths corresponding to Case 3. In other words, a determination is made to change the frequency of the base station 1 from a band of 50 MHz to a band of 20 MHz, and to change the frequency of the base station 2 from a band of 50 MHz to a band of 80 MHz. The communication control device 100 may store information indicating the determined details (the result of the coexistence determination) in the storage unit 220.

Upon receiving a request to obtain a result of a coexistence determination from the frequency management device 300 (a survey result request) (S1112), the communication control device 100 transmits information including the result of the coexistence determination to the frequency management device 300 (S1113). Alternatively, the communication control device 100 may transmit a response including the result of the coexistence determination to the frequency management device 300 after the coexistence determination is complete, without waiting for the survey result request.

The operations performed after the frequency management device 300 receives the information including the result of the coexistence determination are the same as in steps S1006 to S1013 in Fig. 9. In other words, if it is necessary to change the frequencies, the frequency management device 300 transmits a request to the base station 1 and the base station 2 to change the frequencies as a response to the respective transmission continuation requests. The base station 1 and the base station 2 transmit requests to change the frequencies (transmission change requests) to the frequency management device 300. The frequency management device 300 transmits a response permitting the change to the frequency (a transmission change response) to the base station 1 and the base station 2.

Fig. 11 illustrates an example of a sequence performed among the base station 1, the base station 2, the frequency management device 300, and the communication control device 100 when the stadium service performed by the base station 2 is terminated.

Steps S1201 and S1202 are the same as steps S1001 and S1002 in Fig. 9. In other words, the base station 1 periodically transmits a transmission continuation request to the frequency management device 300 (S1201), and the frequency management device 300 transmits a transmission continuation response in response to the transmission continuation request from the base station 1 (S1202).

The base station 2 transmits a notification to stop the use of the frequency (a transmission stop notification) to the frequency management device 300 to terminate the stadium service (S1203). The frequency management device 300 transmits a receipt response in response to the stop notification (a transmission stop response) (S1204). When the operation of the base station 2 is stopped, such as by stopping the power source of the base station 2, and transmission and reception to and from the frequency management device 300 is stopped, the base station 2 further transmits an installation cancellation notification to the frequency management device 300 (S1205). The frequency management device 300 transmits a receipt response in response to the installation cancellation notification (an installation cancellation response) (S 1206).

After stopping the radio wave transmission (frequency use) of the base station 2, the frequency management device 300 transmits a coexistence determination request to the communication control device 100 (S1207). The configuration of the coexistence determination request is the same as the coexistence determination request transmitted in step S1101 of Fig. 10 described above, and includes group information and the like of the base station 2. The communication control device 100 determines the frequency to cause the base station 1 to use when the stadium service is not provided by the base station 2 based on the coexistence conditions in Fig. 6(A) (S1208). In this example, the frequency of the base station 1 is determined to be a band of 100 MHz. A response including the determined frequency is then transmitted (S1209).

Then, in steps S1210 to S1213, the same processing as in steps S1006 to S1009 in Fig. 9 is performed. In other words, the frequency management device 300 transmits a transmission change request requesting that the frequency used be changed to the post-change frequency in response to the transmission continuation request received from the base station 1 (S1210, S1211). The base station 1 transmits a request including the frequency for which the change has been requested (a transmission change request) to the frequency management device 300 (S1212). The frequency management device 300 transmits a response permitting the change to the frequency (a transmission change response) to the base station 1 (S1213). Thereafter, the base station 1 transmits at the frequency permitted to be changed (a band of 100 MHz, in this example).

### (Specific Example 2)

Fig. 12 illustrates an example of two wireless communication systems operated by different operators. One wireless communication system is operated by an operator a and includes a base station 1. The base station 1 provides a general-purpose communication service. Here, the "general-purpose communication service" is, for example, a telephone service or an Internet connection service. The other wireless communication system is operated by an operator b, and includes a base station 2 and a base station 3. The base station 2 and the base station 3 provide a communication service for a live broadcast (= live service). The "live service" is, for example, a data communication service that involves movement, and the communication data is not limited to video or audio. The base station 1 of the operator a basically provides services at all times after the base station 1 is installed. On the other hand, the base station 2 and the base station 3 of the operator b do not always provide the service after the installation of the base station 2 and the base station 3, but basically only provide the service when a live event is being held. As an example, the wireless communication system of the operator a corresponds to the wireless communication system 501 illustrated in Fig. 1, and the wireless communication system of the operator b corresponds to the wireless communication system 502 illustrated in Fig. 1 (the number of base stations is different, however).

The general-purpose communication service and the live service can coexist using frequency bands which at least partially overlap or interfere with each other. In the present embodiment, the same frequency band (the shared frequency band) is used in both services. Dividing the shared frequency band, for example, enables both services to be implemented at the same time without interfering with each other. Dividing the shared frequency band may also include a form in which the two services select and use different frequencies when the shared frequency band includes a plurality of frequencies that are orthogonal to (do not interfere with) each other. If one service is not in operation, the other service can use the entire shared frequency band.

The base station 1 forms three cells (cell 1, cell 2, and cell 3) corresponding to the plurality of antennas. The cells 1 to 3 are also called "coverage 1 to 3". The base station 1 includes three directional antennas each having an angle of beam spread of roughly 120 degrees, and can therefore cover the full 360 degrees using the three directional antennas. The transmission powers of the three directional antennas can be controlled independently.

Fig. 13 illustrates an example of the overall configuration of the system according to Specific Example 2. The wireless communication system of the general-purpose communication service operated by the operator a is a cellular system, and includes 5GC_1 as a core network. The wireless communication system of the live service operated by the operator b is a cellular system, and includes 5GC_2 as a core network.

5GC_1 includes the core network configuration device 700_1 as the network device according to the present embodiment. Unlike Specific Example 1, 5GC_1 does not include a gateway device, but can also be configured to include a gateway device. The core network configuration device 700_1 is connected to the base station 1.

5GC_2 includes a configuration in which a core network configuration device 700_2 and a gateway device 600_2 are integrated as the network device according to the present embodiment. The gateway device 600_2 has a role as a gateway function, which is a new network function (NF) of 5GC_2, and is indicated by "GW 600_2". The core network configuration device 700_2 is connected to the base station 2 and the base station 3 by an AMF, and is connected to the base station 2 and the base station 3 by a UPF. The GW 600_2 is connected to a new EN (= Entity) corresponding to the communication control device 100 as an NF (= Network Function).

The base station 1, the base station 2, and the base station 3 are wired or wirelessly connected to the frequency management device 300.

Fig. 14(A) illustrates an example of the coexistence conditions of the base station 1, the base station 2, and the base station 3 in this specific example. The coexistence condition is a frequency usage condition (radio wave usage condition) to enable the base station 1, the base station 2, and the base station 3 to provide services simultaneously. The coexistence conditions in Fig. 14(A) are stored in the storage unit 220 of the communication control device 100. The storage unit 220 also stores identification information of the group to which each base station belongs. The transmission powers (effective radiation powers) of the base station 1, the base station 2, and the base station 3 which are permitted according to the implementation status of the live service are shown. The value of the transmitted power shown here may be an actual power value, or a percentage (%) of the maximum transmission power value. By controlling the transmission powers, the ranges (sizes) of the cells 1 to 3 of the base station 1, the cell of the base station 2, and the cell of the base station 3 can be controlled independently. In this example, it is assumed that the base station 1 to the base station 3 use the same frequency or frequencies in an interference relationship with each other (for example, the base station 1 to the base station 3 all use bands of 100 MHz).

If the live service is not being implemented, the system of the operator b (the base station 2, the base station 3, and the like) is stopped. At this time, a transmission power value of 100 (the maximum value) can be used in each of the cells 1 to 3 of the base station 1 (or the operator a). In other words, each of the three antennas provided in the base station 1 can transmit radio waves at a transmission power value of 100.

If the live service is being provided, the transmission powers that can be used in the three cells (antennas) of the base station 1, and in the base station 2 and the base station 3, are controlled according to three cases (Case 1, Case 2, and Case 3). In Case 1, a transmission power of 100 can be used in cell 1 and cell 3 of the base station 1, a transmission power of 50 can be used in cell 2, and a transmission power of 50 can be used by the base station 2, but the base station 3 is not transmitting (i.e., the transmission power is zero). In Case 2, a transmission power of 100 can be used in cell 1 of the base station 1, a transmission power of 50 can be used in cell 2 and cell 3, and a transmission power of 50 can be used by the base station 2 and the base station 3. In Case 3, a transmission power of 100 can be used in cell 1 and cell 2 of the base station 1, a transmission power of 50 can be used in cell 3, and a transmission power of 50 can be used by the base station 3, but the base station 2 is not transmitting (i.e., the transmission power is zero).

Fig. 14(B) illustrates the definitions of Case 1 to Case 3. The initial state is Case 2. In this specific example, transitions are made among Case 1 to Case 3 according to the area where a terminal is present among a plurality of areas in the cell of the base station 2 (an area 2a and an area 2b) and a plurality of areas in the cell of the base station 3 (an area 3a and an area 3b).

Fig. 15 illustrates the area 2a and the area 2b in the cell of the base station 2, and the area 3a and the area 3b in the cell of the base station 3.

The area 2a is an area far from the base station 3 among the cells (coverage) when the base station 2 transmits at a transmission power of 50. An "area far from the base station 3" is, as an example, an area in which there is little or no interference with the base station 3, or in which there is little or no interference with a terminal communicating with the base station 3 (e.g., present in a region where the cells of the base station 2 and the base station 3 overlap). The area 2b is an area close to the base station 3 among the cells (coverage) when the base station 2 transmits at a transmission power of 50. The area 3b is an area far from the base station 2 among the cells (coverage) when the base station 3 transmits at a transmission power of 50. An "area far from the base station 2" is, as an example, an area in which there is little or no interference with the base station 2, or in which there is little or no interference with a terminal communicating with the base station 2 (e.g., present in a region where the cells of the base station 2 and the base station 3 overlap). The area 3a is an area close to the base station 2 among the cells (coverage) when the base station 2 transmits at a transmission power of 50.

Fig. 16 illustrates a sequence when the system of the operator a (the base station 1) and the system of the operator b (the base station 2 and the base station 3) apply to the frequency management device 300 for permission to use radio waves (transmission permission) when those operators start their respective services. In this example, it is assumed that all of the base stations 1 to 3 use the same frequency or frequencies that interfere with each other.

The base station 1 transmits, to the frequency management device 300, a request to register the base station 1 in the frequency management device 300 (an installation information registration request) (S1601). The installation registration request is made, for example, when the base station 1 is newly installed. The installation information registration request includes information pertaining to the base station 1. The information pertaining to the base station includes, for example, an identifier of the base station 1, position information of the base station 1, spec information of the base station 1 (e.g., the transmission power value, the frequency, or the like that can be used), group information on the group to which the base station 1 belongs, and so on.

The frequency management device 300 transmits, to the base station 1, a response indicating that the registration in the frequency management device 300 is complete (an installation information registration response) (S1602). The frequency management device 300 may determine whether to permit the registration based on an installation location of the base station 1 or the like. For example, whether to permit the registration may be determined based on a geographical positional relationship with another registered base station.

The base station 1 transmits a radio wave usage permission request (a transmission permission request) to the frequency management device 300 (S1603). In this example, the transmission permission request may include information related to the transmission power value requested for use or the like, and may also include information on the frequency requested for use.

The frequency management device 300 calculates the general usage conditions for radio wave use based on the information included in the transmission permission request, and permits the use of the transmission power or the like requested by the base station when the general usage conditions are met. At this point in time, there are no high-priority systems using the shared frequency band, no base stations belonging to another group using the shared frequency band, and furthermore, no base stations in the same group that are using the shared frequency band. Accordingly, a condition is calculated under which the requested transmission power value can be used. The frequency management device 300 determines that the requested transmission power value satisfies the general usage conditions and that the transmission power value can be used. The frequency management device 300 transmits a response permitting the use of the transmission power value and the like (a transmission permission response or a usage permission response) (S1604). The base station 1 starts transmission (the service) at the transmission power value and the like permitted by the transmission permission response. Then, the base station 1 periodically transmits a request for continuous use of the frequency (a transmission continuation request or a continuous use request) to the frequency management device 300 (S1605). The frequency management device 300 transmits a response permitting the continuous use (a transmission continuation response or a continuous use response) to the base station 1 as long as the general usage conditions are met (S1606).

After the base station 1 is installed and the operator a starts the service using the base station 1, the operator b transmits an installation information registration request from the base station 2 to the frequency management device 300 to start the live service using the base station 2 (S1607). The installation information registration request is a request to register the base station 2 in the frequency management device 300. Note that the base station 2 may be installed after the service of the base station 1 is started, or may be installed before the service of the base station 1 is started.

The installation information registration request includes information pertaining to the base station 2. The information pertaining to the base station includes, for example, an identifier of the base station 2, position information of the base station 2, spec information of the base station 2, group information on the group to which the base station 2 belongs, and so on.

The frequency management device 300 transmits, to the base station 2, a response indicating that the registration in the frequency management device 300 is complete (an installation information registration response) (S1608). The frequency management device 300 may determine whether to permit the registration based on an installation location of the base station 2 or the like. For example, whether to permit the registration may be determined based on a geographical positional relationship with another registered base station.

The base station 2 requests transmission permission from the frequency management device 300 (S1609). The transmission permission request may include information pertaining to the transmission power value requested for use, and may further include the frequency requested for use and the like.

The frequency management device 300 calculates the general usage conditions for radio wave use based on the information included in the transmission permission request, and permits the use of the requested transmission power and the like when the general usage conditions are met. Here, there are no high-priority systems using the shared frequency band and no base stations belonging to another group using the shared frequency band, but there is a base station in the same group using the shared frequency band (the base station 1). Accordingly, the general usage conditions are not met, and the frequency management device 300 transmits, to the communication control device 100, a request to calculate the conditions for the base station 2 to be capable of coexisting (the coexistence conditions) with the base station 1 (the coexistence determination request). The frequency management device 300 then determines the transmission powers for the base station 2 and the base station 1 to use based on a response (an answer) including the result of the coexistence determination from the communication control device 100 (S1610). Requesting the communication control device 100 to calculate the coexistence conditions and determining the transmission power value that can be used based on the response from the communication control device 100 in this manner is called a "coexistence permission determination" or a "transmission permission determination". The coexistence determination request includes the transmission power value requested by the base station 2 for use, whether a terminal is present in the areas 2a and 2b of the base station 2, and the like. Furthermore, the coexistence determination request may include the transmission power value and the like used by the base station 1.

Fig. 17 is a diagram illustrating an example of a sequence in which the frequency management device 300 makes a request for the coexistence determination to the communication control device 100. The frequency management device 300 transmits the coexistence determination request to the communication control device 100 (S1701). The control unit 232 of the communication control device 100 makes the coexistence determination for the base station 1 and the base station 2 based on the coexistence conditions of the groups to which the base station 1 and the base station 2 belong (S1702). For example, the transmission power value (the transmission power value for each antenna) that can be permitted for the base station 1 and the transmission power value that can be permitted for the base station 2 are determined based on whether a terminal is present in the areas 2a and 2b of the base station 2. When the transmission power value requested by the base station 2 is included in the transmission power value that can be permitted for the base station 2, a response (an answer) for the permission for the transmission power value requested by the base station 2 is transmitted to the frequency management device 300 (S1703). When the transmission power value requested by the base station 2 is not included in the transmission power value that can be permitted for the base station 2, a response (an answer) including rejection information indicating that the transmission power requested by the base station 2 cannot be permitted, and the transmission power value determined for the base station 2, is transmitted to the frequency management device 300 (the same S1703). Additionally, when the transmission power value of the base station 1 is changed, a response (an answer) including the post-change transmission power value of the base station 1 is transmitted to the frequency management device 300 (the same S 1703).

A specific example will be described using the examples in Figs. 14 and 15 described above. For example, in a situation where the operator b is not providing the service (in a situation where only the base station 1 is providing the service), the base station 2 is about to start a new service. At this time, the communication control device 100 determines to transition to Case 2 as the initial state, the transmission power for the base station 2 is determined to be 50, and the transmission powers for the cells 1 to 3 of the base station 1 are determined to be 100, 50, and 50, respectively. If the base station 2 requests a transmission power of 50 or less, a response indicating permission is transmitted to the frequency management device 300. If the base station 2 requests a transmission power exceeding 50, a response including the rejection information and a transmission power of 50 is transmitted to the frequency management device 300. Because the transmission powers of the cell 2 and the cell 3 are changed from 100 to 50 in the base station 1, a response including the post-change transmission power of 50 is transmitted to the cell 2 and the cell 3 is transmitted to the frequency management device 300.

If it is necessary to change the transmission power for the base station 1, the frequency management device 300 transmits a transmission power change request (a transmission change request) in response to the transmission continuation request (S1611). The transmission change request includes the post-change transmission power (in the above example, the transmission power of 50 for the cell 2 and the cell 3). The base station 1 transmits the change request (the transmission change request) including the post-change transmission power to the frequency management device 300 (S1612), and the frequency management device 300 transmits a response (a transmission change response) that permits the use of the post-change transmission power to the base station 1 (S1613). Thereafter, the base station 1 transmits in the cell 2 and the cell 3 using the post-change transmission power.

If the frequency management device 300 permits a transmission power different from the transmission power requested by the base station 2 (if the transmission power requested by the base station 2 cannot be permitted), a transmission rejection response and a transmission power change request are transmitted as a response to the transmission permission request received in S1609 (S1614). The transmission change request includes the post-change transmission power value (50, in the above example). The base station 2 transmits the transmission permission request (the usage permission request) including the transmission power value for which the change has been requested to the frequency management device 300 (S1615), and the frequency management device 300 transmits a response (the transmission permission response) that permits the use of that transmission power value to the base station 2 (S1616). Thereafter, the base station 2 transmits at the permitted transmission power value. In other words, the operator b starts the live service between the terminal and the base station 2.

The base station 1 periodically transmits a request for continuous use of the frequency (a transmission continuation request or a continuous use request) to the frequency management device 300 (S1617). The frequency management device 300 transmits a response permitting the continuous use (a transmission continuation response or a continuous use response) to the base station 1 as long as the general usage conditions are met (S1618).

After the base station 2 starts the service, the operator b transmits a request to register the base station 3 in the frequency management device 300 (the installation information registration request) from the base station 3 to the frequency management device 300 to start the live service using the base station 3 (S1619). Note that the base station 3 may be installed after the service of the base station 2 is started, or may be installed before the service of the base station 2 is started.

The installation information registration request includes information pertaining to the base station 3. The information pertaining to the base station includes, for example, an identifier of the base station 3, position information of the base station 3, spec information of the base station 3, group information on the group to which the base station 3 belongs, and so on.

The frequency management device 300 transmits, to the base station 3, a response indicating that the registration in the frequency management device 300 is complete (an installation information registration response) (S1620). The frequency management device 300 may determine whether to permit the registration based on an installation location of the base station 3 or the like. For example, whether to permit the registration may be determined based on a geographical positional relationship with another registered base station.

The base station 3 transmits the transmission permission request to the frequency management device 300 (S1621). The transmission permission request includes the transmission power value requested to be used and the like.

The frequency management device 300 calculates the general usage conditions for radio wave use based on the information included in the transmission permission request, and permits the use of the requested transmission power and the like when the general usage conditions are met. Here, there are no high-priority systems using the shared frequency band and no base stations belonging to another group using the shared frequency band, but there is a base station in the same group using the shared frequency band (the base station 1 and the base station 2). Accordingly, the general usage conditions are not met, and the frequency management device 300 transmits, to the communication control device 100, a request to calculate the conditions for the base station 3 to be capable of coexisting (the coexistence conditions) with the base station 1 and the base station 2 (the coexistence determination request). The frequency management device 300 determines the transmission powers for the base station 3, as well as the base stations 1 and 2, to use based on a response (an answer) including the result of the coexistence determination from the communication control device 100 (S1622). Requesting the communication control device 100 to calculate the coexistence conditions and determining the transmission power value that can be used based on the response from the communication control device 100 in this manner is called a "coexistence permission determination" or a "transmission permission determination". The coexistence determination request includes the transmission power value requested by the base station 3 for use, whether a terminal is present in the areas 3a and 3b of the base station 3, and the like. Furthermore, the coexistence determination request may include the transmission power values requested by the base station 1 and the base station 2 for use, whether a terminal is present in the areas 2a and 2b of the base station 2, and the like.

As illustrated in Fig. 17, the frequency management device 300 transmits the coexistence determination request to the communication control device 100 (S1701). The control unit 232 of the communication control device 100 makes the coexistence determination for the base stations 1 to 3 based on the coexistence conditions of the groups to which the base stations 1 to 3 belong (S1702). For example, the transmission power value (the transmission power value for each antenna) that can be permitted for the base station 1 and the transmission power values that can be permitted for the base station 2 and the base station 3 are determined based on whether a terminal is present in the areas 3a and 3b of the base station 3 and the areas 2a and 2b of the base station 2. When the transmission power value requested by the base station 3 is included in the transmission power value that can be permitted for the base station 3, a response (an answer) for the permission for the transmission power value requested by the base station 3 is transmitted to the frequency management device 300 (S1703). When the transmission power value requested by the base station 3 is not included in the transmission power value that can be permitted for the base station 3, a response (an answer) including rejection information indicating that the transmission power requested by the base station 3 cannot be permitted, and the transmission power value determined for the base station 3, is transmitted to the frequency management device 300 (the same S1703). Additionally, when the transmission power value of the base station 1, the base station 2, or both is changed, a response (an answer) including the post-change transmission power value of the base station 1, the base station 2, or both is transmitted to the frequency management device 300 (the same S1703).

A specific example will be described using the examples in Figs. 14 and 15 described above. For example, in the situation in Case 2, the base station 3 is about to newly start a service. If the base station 3 requests a transmission power of 50 or less, a response indicating permission is transmitted to the frequency management device 300. If the base station 3 requests a transmission power exceeding 50, a response including the rejection information and a transmission power of 50 is transmitted to the frequency management device 300. The transmission power is not changed for the base station 1 and the base station 2.

If the frequency management device 300 permits a transmission power different from the transmission power requested by the base station 3 (if the transmission power requested by the base station 3 cannot be permitted), a transmission rejection response and a transmission power change request are transmitted as a response to the transmission permission request received in S1621 (S 1623). The transmission change request includes the post-change transmission power value (50, in the above example). The base station 3 transmits the transmission permission request (the usage permission request) including the transmission power value for which the change has been requested to the frequency management device 300 (S1624), and the frequency management device 300 transmits a response (the transmission permission response) that permits the use of that transmission power value to the base station 3 (S1625). Thereafter, the base station 3 transmits at the permitted transmission power value. In other words, the operator b starts the live service between the terminal and the base station 3.

The base station 2 periodically transmits a request for continuous use of the frequency (a transmission continuation request or a continuous use request) to the frequency management device 300 (S1626). The frequency management device 300 transmits a response permitting the continuous use (a transmission continuation response or a continuous use response) to the base station 1 as long as the general usage conditions are met (S1627).

Fig. 18 illustrates an example of a sequence performed among the base station 1, the base station 2, the base station 3, and the frequency management device 300 during the live service operation. The base station 1, the base station 2, and the base station 3 have already started the services, i.e., radio waves are being transmitted. The base station 1, the base station 2, and the base station 3 periodically transmit the transmission continuation request to the frequency management device 300 (S1801, S1803, S1805). The frequency management device 300 transmits the transmission continuation response indicating permission to continue transmission to the base station 1, the base station 2, and the base station 3 as long as the general usage conditions are met for base stations or systems outside the group (S1802, S1804, S1806). The processing of steps S1801 and S 1802, the processing of steps S1803 and S1804, and the processing of steps S1805 and S1806 are repeated at regular intervals, respectively. The frequency management device 300 transmits, to the communication control device 100, the coexistence determination request requesting the coexistence determination for the base stations 1 to 3, as a transmission change determination (S1807) at a predetermined timing. The predetermined timing is, for example, the timing at which the transmission continuation request has been received from one of the base stations, the timing at which a set period of time has passed since the previous coexistence determination, or the like. Here, the coexistence determination includes a determination as to whether it is necessary for the base station 1 to the base station 3 to change the transmission powers used from the current transmission powers. As an example, the coexistence determination request may include group information on the groups to which the base stations 1 to 3 belong. As a response to the coexistence determination request, the frequency management device 300 does nothing upon receiving a response (an answer) from the communication control device 100 indicating that the transmission powers of the base stations 1 to 3 are not to be changed.

On the other hand, if a response including an indication that the transmission powers of the base stations 1 to 3 are to be changed and the post-change transmission powers is received from the communication control device 100, the frequency management device 300 transmits a transmission change request in response to the transmission continuation request received from the base station 1 to the base station 3 (S1808, S1809, S1812, S1813, S1816, S1817). The transmission change request makes a request to change the transmission power to be used to the post-change transmission power. The base station 1 to the base station 3 transmit a request including the transmission power for which the change has been requested (a transmission change request) to the frequency management device 300 (S1810, S1814, S1818). The frequency management device 300 transmits a response permitting the change to the transmission power (a transmission change response) to the base station 1 to the base station 3 (S1811, S1815, S1819). Thereafter, the base station 1 to the base station 3 each transmit at the transmission power for which the change has been permitted.

Fig. 19 illustrates an example of a sequence performed among the communication control device 100, 5GC_2 of the operator b, and the frequency management device 300, involved in the coexistence determination made by the communication control device 100 during the operation of the live service.

Upon receiving the coexistence determination request from the frequency management device 300 (S1901), the communication control device 100 transmits a receipt confirmation response to the frequency management device 300 (S1902). Based on the coexistence determination request, the communication control device 100 obtains the information necessary for the coexistence determination from the GW 600_2 of 5GC_2.

Specifically, after the coexistence determination request is received from the frequency management device 300, the communication control device 100 transmits a request to survey of the number of terminals (number of users) of the base station 2 and the base station 3 and the terminal positions (a survey request) to the GW 600_2 of 5GC_2 as information necessary for the coexistence determination (S 1903). This survey request is an example of a request to obtain the communication status information pertaining to the base station 2 and the base station 3.

Upon receiving the survey request from the communication control device 100, the GW 600_2 of 5GC_2 transmits a request to obtain the number of terminals and the terminal positions (the user number request) to the AMF, which manages the number of terminals and the terminal positions for the base station 2 and the base station 3 (S1904). The AMF is part of the elements constituting the core network configuration device 700_1. When the GW 600_2 of 5GC_2 obtains a response from the AMF containing information on the number of terminals and the terminal positions (S1905), the information on the number of terminals and the terminal positions is processed according to the type of the survey request, and a response including the processed information is transmitted (S1906). Examples of the processed information include the average number of terminals or the maximum number of terminals for a set period of time in each area of the base station 2 and the base station 3. Examples of processing the information are as described above. The processed information may be data representing fluctuations in the terminal information (the number of terminals, terminal positions, and the like) within a set period of time. Here, the obtainment request is provided to the AMF when the survey request is received, but the obtainment request may be provided to the AMF periodically or at another timing, and the information on the number of terminals and the terminal position may be obtained, regardless of whether the survey request is received. The information may then be processed in advance in accordance with variation in the type of the survey request, and stored in the storage unit 620 as the communication status information. This makes it possible to respond to the survey request immediately.

The communication control device 100 makes the coexistence determination for the base stations 1 to 3 based on the information obtained from the GW 600_2 (S1907). For example, if the case currently applied is Case 2, illustrated in Fig. 14(B), and the obtained information matches Case 3 illustrated in Fig. 14(B), a determination is made to change the transmission power of the cell 2 of the base station 1 and the transmission power of the base station 2 to the transmission powers corresponding to Case 3. In other words, a determination is made to change the transmission power of the cell 2 of the base station 1 from 50 to 100, and to change the transmission power of the base station 2 from 50 to zero (no transmission). As another example, if the case currently applied is Case 2, illustrated in Fig. 14(B), and the obtained information matches Case 1 illustrated in Fig. 14(B), a determination is made to change the transmission power of the cell 3 of the base station 1 and the transmission power of the base station 3 to the transmission powers corresponding to Case 1. In other words, a determination is made to change the transmission power of the cell 3 of the base station 1 from 50 to 100, and to change the frequency of the base station 3 to 50 or zero (no transmission). The communication control device 100 may store information indicating the determined details (the result of the coexistence determination) in the storage unit 220.

Upon receiving a request to obtain a result of a coexistence determination from the frequency management device 300 (the survey result request) (S1908), the communication control device 100 transmits information including the result of the coexistence determination to the frequency management device 300 (S1909). Alternatively, the communication control device 100 may transmit information including the result of the coexistence determination to the frequency management device 300 after the coexistence determination is complete, without waiting for the survey result request.

The operations performed after the frequency management device 300 receives the information including the result of the coexistence determination are the same as in steps S1808 to S1819 in Fig. 18. In other words, if it is necessary to change the transmission powers, the frequency management device 300 transmits a request to the base station 1, the base station 2, and the base station 3 to change the transmission powers as a response to the respective transmission continuation requests. The base station 1, the base station 2, and the base station 3 transmit requests to change the transmission powers (transmission change requests) to the frequency management device 300. The frequency management device 300 transmits a response permitting the change to the transmission power (a transmission change response) to the base station 1, the base station 2, and the base station 3.

Fig. 20 illustrates an example of a sequence performed among the base stations 1 to 3, the frequency management device 300, and the communication control device 100 when the live service performed by the base station 2 and the base station 3 is terminated.

Steps S2001 and S2002 are the same as steps S1201 and S1202 in Fig. 11. In other words, the base station 1 periodically transmits a transmission continuation request to the frequency management device 300 (S2001), and the frequency management device 300 transmits a transmission continuation response in response to the transmission continuation request from the base station 1 (S2002).

Steps S2003 to S2006 are the same as steps S1203 to S1206 in Fig. 12. In other words, the base station 2 transmits a notification to stop the radio wave use (a transmission stop notification) to the frequency management device 300 to terminate the live service (S2003). The frequency management device 300 transmits a receipt response in response to the stop notification (a transmission stop response) (S2004). When the operation of the base station 2 is stopped, such as by stopping the power source of the base station 2, and transmission and reception to and from the frequency management device 300 is stopped, the base station 2 further transmits an installation cancellation notification to the frequency management device 300 (S2005). The frequency management device 300 transmits a receipt response in response to the installation cancellation notification (an installation cancellation response) (S2006).

After the base station 2, the base station 3 also transmits a notification to stop the radio wave use (a transmission stop notification) to the frequency management device 300 to terminate the live service (S2007). The frequency management device 300 transmits a receipt response in response to the stop notification (a transmission stop response) (S2008). When the operation of the base station 3 is stopped, such as by stopping the power source of the base station 3, and transmission and reception to and from the frequency management device 300 is stopped, the base station 3 further transmits an installation cancellation notification to the frequency management device 300 (S2009). The frequency management device 300 transmits a receipt response in response to the installation cancellation notification (an installation cancellation response) (S2010).

After stopping the radio wave transmission (frequency use) of the base station 2 and the base station 3, the frequency management device 300 transmits a coexistence determination request to the communication control device 100 (S2011). The configuration of the coexistence determination request is the same as the coexistence determination request transmitted in step S1207 of Fig. 11 described above, and includes group information and the like of the base station 2 and the base station 3. The communication control device 100 determines the transmission power to cause the base station 1 to use when the live service is not provided by the base station 2 and the base station 3 based on the coexistence conditions in Fig. 14(A) (S2012). In this example, the transmission power of cells 1 to 3 of the base station 1 is set to 100, and a response including the set transmission power and the like is transmitted (S2013).

Then, in steps S2014 to S2017, the same processing as in steps S1210 to S1213 in Fig. 11 is performed. In other words, the frequency management device 300 transmits a transmission change request requesting that the transmission power used be changed to the post-change transmission power in response to the transmission continuation request received from the base station 1 (S2014, S2015). The base station 1 transmits the request (the transmission change request) including the transmission power value for which the change was requested to the frequency management device 300 (S2016), and the frequency management device 300 transmits a response (a transmission change response) that permits the change to that frequency to the base station 1 (S2017). Thereafter, the base station 1 transmits at the transmission power for which the change was permitted.

Fig. 21 illustrates an example of a change in the cells (coverage) of each of the base stations in response to movement of a terminal while the live service is being provided.

Fig. 21(A) illustrates a state prior to the start of the live service (no service). At this time, the transmission power of the base station 1 is 100 in all of the cells 1 to 3. On the other hand, the coverage of the base station 2 and the base station 3 is not yet formed.

Fig. 21(B) illustrates the coverage of the base stations 1 to 3 when the live service by the base station 2 and the base station 3 has been started and the case has transitioned to Case 2. There is no terminal under the coverage of either the base station 2 or the base station 3. The transmission powers of the cell 2 and the cell 3 of the base station 1 are set to 50, and the coverage is reduced. The transmission power of the cell 1 is 100, and the coverage does not change. The base station 2 and the base station 3 form coverage at a transmission power of 50.

In Fig. 21(C), a terminal is present only in the area 2a of the base station 2 (an area far from the base station 3). The transmission power of the cell 3 of the base station 1 is increased to 100. This expands the cell 3 (the coverage) of the base station 1. In addition, the transmission power of the base station 3 is reduced to zero, which eliminates the cell of the base station 3.

In Fig. 21(D), the terminal moves to the area 2b of the base station 2 (an area close to the base station 3). The transmission power of the cell 3 of the base station 1 is reduced to 50, and the cell 3 (the coverage) of the base station 1 is reduced. The transmission power of the base station 3 is also set to 50, and a cell of the base station 3 is formed.

In Fig. 21(E), the terminal moves to the area 3b of the base station 3 (an area far from the base station 2). The transmission power of the base station 2 is reduced to zero, and the cell of the base station 2 is eliminated. The transmission power of the cell 2 of the base station 1 is increased to 100, and the cell 2 (the coverage) of the base station 1 is expanded.

In Fig. 21(F), the live service of the base station 2 and the base station 3 is terminated, and the transmission powers of the base station 2 and the base station 3 are set to zero. As a result, the cells of the base station 2 and the base station 3 are eliminated. The transmission power of the cell 3 of the base station 1 is increased to 100, and the cell 3 is expanded.

### (Specific Example 3)

Fig. 22 illustrates an example of two wireless communication systems operated by different operators. One wireless communication system is operated by an operator a and includes a base station 1. The base station 1 provides a general-purpose communication service. Here, the "general-purpose communication service" is, for example, a telephone service or an Internet connection service. The other wireless communication system is operated by an operator b and includes a base station 2. Like the base station 1, a base station 2 provides a general-purpose communication service. The base station 1 of the operator a and the base station 2 of the operator b basically provide services at all times after the base station 1 and the base station 2 are installed. As an example, the wireless communication system of the operator a corresponds to the wireless communication system 501 illustrated in Fig. 1, and the wireless communication system of the operator b corresponds to the wireless communication system 502 illustrated in Fig. 1 (the number of base stations is different, however).

The cells (coverage) of the base station 1 and the base station 1 are indicated by dotted line circles around each of the base stations, and it is assumed that when the base station 1 and the base station 2 actually communicate with terminals T1 and T2 in the respective cells, beams B 1 and B2, which are radio waves having directionality, are used. In other words, when a terminal is within the coverage of a base station, the base station and the terminal can communicate using beams. In this example, it is assumed that the base station 1 and the base station 2 use the same frequency or frequencies in an interference relationship with each other (for example, the base station 1 and the base station 2 both use bands of 100 MHz). When the terminal T1 and the terminal T2 transmit to the base station 1 and the base station 2, respectively, beams may be used, or omnidirectional communication (omni-communication) may be performed.

Fig. 23 illustrates an example of the overall configuration of the system according to Specific Example 2. The block diagram in Fig. 23 is the same as the block diagram in Fig. 5, but differs from Fig. 5 in that the operator b provides a general-purpose communication service.

Fig. 24 illustrates coexistence conditions of the base stations in this specific example. Coexistence conditions such as those in Fig. 24 are stored in the storage unit 220 of the communication control device 100. The coexistence conditions in Fig. 24 stipulate that when the beam of the base station 1 and the beam of the base station 2 overlap, the beam of the base station 1 is prioritized.

Fig. 25 is a descriptive diagram of the coexistence conditions in Fig. 24. In Figs. 24(A) and 24(B), the beam B1 of the base station 1 and the beam B2 of the base station 2 do not overlap. Accordingly, both beams B1 and B2 can be transmitted simultaneously (coexist). In Fig. 24(C), the beam B 1 of the base station 1 and the beam of the base station 2 overlap. In this case, the connection between the base station 1 and the terminal T1 is prioritized. In other words, beam transmission between the base station 2 and the terminal T2 is prohibited, and only beam transmission between the base station 1 and the terminal T1 is permitted. The control unit 232 of the communication control device 100 has a function for determining whether the two beams overlap.

Fig. 26 illustrates a sequence in which the base station 1 and the base station 2 apply to the frequency management device 300 for permission to use radio waves or frequencies when the base station 1 and the base station 2 start their respective services.

The base station 1 transmits, to the frequency management device 300, a request to register the base station 1 in the frequency management device 300 (an installation information registration request) (S2501). The installation registration request is made, for example, when the base station 1 is newly installed. The installation information registration request includes information pertaining to the base station 1. The information pertaining to the base station includes, for example, an identifier of the base station 1, position information of the base station 1, spec information of the base station 1, group information on the group to which the base station 1 belongs, and so on.

The frequency management device 300 transmits, to the base station 1, a response indicating that the registration in the frequency management device 300 is complete (an installation information registration response) (S2502). The frequency management device 300 may determine whether to permit the registration based on an installation location of the base station 1 or the like. For example, whether to permit the registration may be determined based on a geographical positional relationship with another registered base station.

The base station 1 transmits a beam usage permission request (a transmission permission request) to the frequency management device 300 (S2503). The transmission permission request includes information related to the beam requested for use, such as parameters of the beam requested for use or the like. In addition, information on the frequency requested for use may be included.

The frequency management device 300 calculates the general usage conditions for radio wave use based on the information included in the transmission permission request, and permits the use of the requested beam and the like when the general usage conditions are met. At this point in time, there are no high-priority systems using the shared frequency band, no base stations belonging to another group using the shared frequency band, and furthermore, no base stations in the same group that are using the shared frequency band. Accordingly, a condition that a given beam can be used is calculated as the general usage condition. The frequency management device 300 determines that the requested beam satisfies the general usage conditions and that the beam can be used. The frequency management device 300 transmits a response permitting the use of the beam and the like (a transmission permission response or a usage permission response) (S2504). The base station 1 starts transmission (the service) using the beam and the like permitted by the transmission permission response. Then, the base station 1 periodically transmits a request for continuous use of the frequency and the beam (a transmission continuation request or a continuous use request) to the frequency management device 300 (S2505). The frequency management device 300 transmits a response permitting the continuous use of the frequency and the beam (a transmission continuation response or a continuous use response) to the base station 1 as long as the general usage conditions are met (S2506).

After the base station 1 is installed and the operator a starts the service using the base station 1, the operator b transmits an installation information registration request from the base station 2 to the frequency management device 300 to start the service using the base station 2 (S2507). The installation information registration request is a request to register the base station 2 in the frequency management device 300. Note that the base station 2 may be installed after the service of the base station 1 is started, or may be installed before the service of the base station 1 is started.

The installation information registration request includes information pertaining to the base station 2. The information pertaining to the base station includes, for example, an identifier of the base station 2, position information of the base station 2, spec information of the base station 2, group information on the group to which the base station 2 belongs, and so on.

The frequency management device 300 transmits, to the base station 2, a response indicating that the registration in the frequency management device 300 is complete (an installation information registration response) (S2508). The frequency management device 300 may determine whether to permit the registration based on an installation location of the base station 2 or the like. For example, whether to permit the registration may be determined based on a positional relationship with another registered base station.

The base station 2 transmits the transmission permission request to the frequency management device 300 (S2509). The transmission permission request includes information related to the beam requested for use, such as parameters of the beam requested for use or the like. Information on the frequency requested for use may further be included.

The frequency management device 300 calculates the general usage conditions for radio wave use based on the information included in the transmission permission request, and permits the use of the requested frequency, beam, and the like when the general usage conditions are met. Here, there are no high-priority systems using the shared frequency band and no base stations belonging to another group using the shared frequency band, but there is a base station in the same group using the shared frequency band (the base station 1). Accordingly, the general usage conditions are not met, and the frequency management device 300 transmits, to the communication control device 100, a request to calculate the conditions for the base station 2 to be capable of coexisting (the coexistence conditions) with the base station 1 (the coexistence determination request). The frequency management device 300 then determines whether the beam of the base station 2 can be used based on a response (an answer) including the result of the coexistence determination from the communication control device 100 (S2510). Requesting the communication control device 100 to calculate the coexistence conditions and determining whether the beam transmission by the base station 2 can be used based on the response from the communication control device 100 in this manner is called a "coexistence permission determination" or a "transmission permission determination". The coexistence determination request includes parameters of the beam requested for use by the base station 2. Furthermore, the coexistence determination request may include parameters and the like of the beam used by the base station 1.

Fig. 27 is a diagram illustrating an example of a sequence in which the frequency management device 300 makes a request for the coexistence determination to the communication control device 100. The frequency management device 300 transmits the coexistence determination request to the communication control device 100 (S2601). The control unit 232 of the communication control device 100 makes the coexistence determination for the base station 1 and the base station 2 based on the coexistence conditions of the groups to which the base station 1 and the base station 2 belong. For example, if the beam that the base station 2 is requesting to use does not interfere with the beam of the base station 1 in the same group used in the shared frequency band, the beam requested by the base station 2 is permitted (S2602). The communication control device 100 transmits a response (an answer) indicating the beam or the like requested by the base station 2 is permitted to the frequency management device 300 (S2603). As an example, whether interference will occur is based on the position information of the base station 1, the base station 2, the terminal T1, and the terminal T2. Furthermore, the parameter information on the beams of the base station 1 and the base station 2 may be used. Furthermore, when the terminal T1 and the terminal T2 transmit beams, the parameter information of the beams of the terminal T1 and the terminal T2 may be used.

On the other hand, when the beam requested for use by the base station 2 will interfere with the beam of the base station 1, the control unit 232 of the communication control device 100 determines not to permit the use of the beam requested by the base station 2 (the same S2602). The control unit 232 transmits a response (an answer) instructing no beam to be transmitted to the frequency management device 300 (S2603).

If the beam transmission is stopped for the base station 1 (assuming, however, that in this example, the beam transmission by the base station 1 is prioritized and the beam basically will not be stopped), the frequency management device 300 transmits a request to stop the beam (a transmission change request) in response to the transmission continuation request (S2511). The transmission change request includes an instruction to stop. The base station 1 transmits the change request (the transmission change request) including an acknowledgment regarding the stopping of the beam to the frequency management device 300 (S2512), and the frequency management device 300 transmits a response (the transmission change response) that prohibits the use of the beam to the base station 1 (S2513). Thereafter, the base station 1 does not transmit the beam.

If the beam transmission is stopped for the base station 2, the frequency management device 300 transmits a request to stop the beam (a transmission change request) in response to the transmission continuation request (S2514). The transmission change request includes an instruction to stop. The base station 2 transmits the change request (the transmission change request) including an acknowledgment regarding the stopping of the beam to the frequency management device 300 (S2515), and the frequency management device 300 transmits a response (the transmission change response) that prohibits the use of the beam to the base station 2 (S2516). The base station 2 does not transmit the beam.

Fig. 28 illustrates an example of a sequence performed among the base station 1, the base station 2, and the frequency management device 300 after the start of operation. The base station 1 and the base station 2 periodically transmit the transmission continuation request to the frequency management device 300 (S2701, S2703). The frequency management device 300 transmits the transmission continuation response indicating permission to continue transmission to the base station 1 and the base station 2 as long as the general usage conditions are met for base stations or systems outside the group (S2702, S2704). The processing of steps S2701 and S2702 is repeated at regular intervals, and the processing of steps S2703 and S2704 is repeated at regular intervals. The frequency management device 300 transmits, to the communication control device 100, the coexistence determination request requesting the coexistence determination for the base station 1 and the base station 2, as a transmission change determination (S2705) at a predetermined timing. The predetermined timing is, for example, the timing at which the transmission continuation request has been received from one of the base stations, the timing at which a set period of time has passed since the previous coexistence determination, or the like. Here, the coexistence determination includes a determination as to whether the base station 1 and the base station 2 can use the current beams. As an example, the coexistence determination request may include group information on the groups to which the base station 1 and the base station 2 belong. As a response to the coexistence determination request, the frequency management device 300 does nothing upon receiving a response (an answer) from the communication control device 100 indicating that the current beams of the base station 1 and the base station 2 can be used.

On the other hand, if a response instructing the beam transmission by the base station 1 and the base station 2 to be stopped is received from the communication control device 100, the frequency management device 300 transmits a transmission change request in response to the transmission continuation request received from the base station 1 or the base station 2 (S2706, S2707, S2710, S2711). The transmission change request requests the beam transmission to be stopped. Upon receiving the transmission change request, the base station 1 or the base station 2 transmits a transmission change request to the frequency management device 300, including an acknowledgement that the beam is to be stopped (or a change of the transmission power to 0) (S2708, S2712). The frequency management device 300 transmits a response permitting the beam transmission to stop (a transmission change response) to the base station 1 or the base station 2 (S2709, S2713).

Fig. 29 illustrates an example of a sequence performed among the communication control device 100, 5GC_1, 5GC_2, and the frequency management device 300, involved in the coexistence determination made by the communication control device 100 during the operation of the service by the base station 1 and the base station 2.

Upon receiving the coexistence determination request from the frequency management device 300 (S2801), the communication control device 100 transmits a receipt confirmation response to the frequency management device 300 (S2802). Based on the coexistence determination request, the communication control device 100 obtains the information necessary for the coexistence determination from the GW 600_1 of 5GC_1 and the GW 600_2 of 5GC_2.

Specifically, after the coexistence determination request is received from the frequency management device 300, the communication control device 100 transmits a request to survey the position of the terminal in the cell of the base station 1 (a terminal position survey request) to the GW 600_1 of 5GC_1 as information necessary for the coexistence determination (S2803). The survey request corresponds to an example of communication status information of the terminal that communicates with the base station 1. The communication control device 100 also transmits a request to survey the position of the terminal in the cell of the base station 2 (a terminal position survey request) to the GW 600_2 of 5GC_2 (S2807). The survey request corresponds to an example of communication status information of the terminal that communicates with the base station 2.

Upon receiving the terminal position survey request from the communication control device 100, the GW 600_1 of 5GC_1 provides a request to obtain the terminal position to the AMF that manages the terminal position (a terminal position request) (S2804). The AMF is part of the elements constituting the core network configuration device 700_1. Upon obtaining a response including the terminal position information from the AMF (S2805), the GW 600_1 of 5GC_1 processes the information on the terminal position according to the type of the terminal position survey request, and transmits a response including the processed information (S2806). Examples of the processed information include a history of the terminal positions for each set period of time, the terminal position a set period of time in the past, the current terminal position, and a predicted position of the terminal in the future. Here, the terminal position request is provided when the terminal position survey request is received, but the terminal position request may be provided regularly or at another timing, and the information on the terminal position may be obtained, regardless of whether the terminal position survey request is received. The obtained information may then be processed in accordance with variation in the type of the terminal survey request, and the processed information may be stored in the storage unit 620. This makes it possible to respond to the terminal position survey request immediately.

Upon receiving the terminal position survey request from the communication control device 100, the GW 600_2 of 5GC_2 provides a request to obtain the terminal position to the AMF that manages the terminal position (a terminal position request) (S2808). The AMF is part of the elements constituting the core network configuration device 700_1. Upon obtaining a response including the terminal position information from the AMF (S2809), the GW 600_2 of 5GC_2 processes the information on the terminal position according to the type of the terminal position survey request, and transmits a response including the processed information (S2810). Examples of the processed information include a history of the terminal positions for each set period of time, the terminal position a set period of time in the past, the current terminal position, and a predicted position of the terminal in the future. Here, the terminal position request is provided when the terminal position survey request is received, but the terminal position request may be provided regularly or at another timing, and the information on the terminal position may be obtained, regardless of whether the terminal position survey request is received. The obtained information may then be processed in advance in accordance with variation in the type of the terminal survey request, and the processed information may be stored in the storage unit 620. This makes it possible to respond to the terminal position survey request immediately.

The communication control device 100 makes the coexistence determination for the base station 1 and the base station 2 based on the information obtained from the GW 600_1 and the GW 600_2 (S2811). For example, whether the beam between the base station 1 and the terminal T1 overlaps with the beam between the base station 2 and the terminal T2 is calculated, and when the beams overlap, the it is determined that the beam cannot be transmitted by the base station 2 (in the case of the coexistence conditions illustrated in Fig. 24). The communication control device 100 may store information indicating the determined details (the result of the coexistence determination) in the storage unit 220.

Upon receiving a request to obtain a result of a coexistence determination from the frequency management device 300 (the survey result request) (S2812), the communication control device 100 transmits information including the result of the coexistence determination to the frequency management device 300 (S2813). The communication control device 100 may transmit a response including the result of the coexistence determination to the frequency management device 300 after the coexistence determination is complete, without waiting for the survey result request.

The operations performed after the frequency management device 300 receives the information including the result of the coexistence determination are the same as in steps S2706 to S2713 in Fig. 28.

Fig. 30 illustrates an example of a sequence performed among the base station 1, the base station 2, the frequency management device 300, and the communication control device 100 when the service performed by the base station 2 is terminated.

The base station 1 periodically transmits a transmission continuation request to the frequency management device 300 (S2901), and the frequency management device 300 transmits a transmission continuation response in response to the transmission continuation request from the base station 1 (S2902).

The base station 2 transmits a notification to stop the use of the frequency or the beam transmission (a transmission stop notification) to the frequency management device 300 to terminate the service (S2903). The frequency management device 300 transmits a receipt response in response to the stop notification (a transmission stop response) (S2904). When the operation of the base station 2 is stopped, such as by stopping the power source of the base station 2, and transmission and reception to and from the frequency management device 300 is stopped, the base station 2 further transmits an installation cancellation notification to the frequency management device 300 (S2905). The frequency management device 300 transmits a receipt response in response to the installation cancellation notification (an installation cancellation response) (S2906).

After stopping the radio wave transmission (frequency use) of the base station 2, the frequency management device 300 transmits a coexistence determination request to the communication control device 100 (S2907). The configuration of the coexistence determination request is the same as the coexistence determination request transmitted in step S2801 of Fig. 29 described above, and includes group information and the like of the base station 2. The communication control device 100 determines whether the beam of the base station 1 can be used when the service is not provided by the base station 2 based on the coexistence conditions (S2908). In the example of the coexistence conditions in Fig. 24, the beam transmission of the base station 1 is prioritized over the beam transmission of the base station 2, and thus the beam transmission of the base station 1 is permitted regardless of whether the base station 2 is transmitting a beam. The communication control device 20 transmits a response including information on whether the base station 1 can transmit the beam (in this example, the beam can be transmitted) (S2909).

When the frequency management device 300 determines that the base station 1 can transmit the beam, a transmission continuation response may be transmitted in the same manner as in step S2902. On the other hand, upon determining that the base station 1 cannot transmit the beam, the frequency management device 300 transmits a transmission change request requesting the beam transmission to be stopped (or setting the transmission power to zero) in response to the transmission continuation request received from the base station 1 (S2910, S2911). The base station 1 transmits a request including an acknowledgment that the beam transmission is to be stopped (a transmission change request) to the frequency management device 300 (S2912), and the frequency management device 300 transmits a response (a transmission change response) that permits the beam transmission to be stopped to the base station 1 (S2913). Thereafter, the base station 1 is prohibited from transmitting a beam with the terminal T1 until the beam transmission is permitted in a subsequent coexistence determination.

Although the foregoing Specific Example 3 describes determining whether the base station 1 and the base station 2 can transmit beams based on the coexistence conditions, the beam shapes (the parameter information on the beams) which are permitted for the base station 1 and the base station 2 may be determined instead. For example, the control unit 232 of the communication control device 100 may calculate or determine the shape of the beam permitted for the base station 1 and the shape of the beam permitted for the base station 2 as the coexistence conditions in accordance with the positional relationship between the base station 1 and the terminal T1 and the positional relationship between the base station 2 and the terminal T2. Depending on the position of the base station 1, the terminal 1, the base station 2, and the terminal 1, the parameter information on the beams that can be used by the base station 1 and the base station 2 may be held in a table of coexistence conditions in advance. Note that when the positional relationships between the base stations 1 and 2 and the terminals T1 and T2 indicated that the beams cannot coexist, the beam transmission by one of the base station 1 and the base station 2 may be prohibited. If the communication control device 100 determines to change the beam shape permitted for the base station 1 or the base station 2, a response including the parameter information after the change to the beam shape for the base station 1 or the base station 2 may be transmitted to the frequency management device 300.

According to the present embodiment as described thus far, parameters pertaining to radio wave use can be adjusted adaptively in order to increase the usage efficiency for a frequency band that can be shared among a plurality of wireless communication systems. Furthermore, the sharing method according to the present embodiment can easily coexist with methods of sharing of frequency bands already put into practical use.

The present embodiment can be applied not only when a plurality of wireless communication systems share a predetermined shared frequency band, but also when a plurality of wireless communication systems use adjacent frequency bands without interference.

The frequency management device 300 and the communication control device 100 may be integrated to perform all processing using a single communication control device. Alternatively, a single base station may transmit a common request or inquiry to the frequency management device and the communication control device.

The frequency management device 300 may control the base station not only in terms of the frequency bandwidth and transmission power (effective radiation power), but also by using more detailed settings for wireless communication, such as TDD Configuration settings, for example.

The steps of the processing disclosed in the present specification do not absolutely have to be performed in the orders illustrated in the flowcharts. For example, the steps may be executed in orders different from the orders illustrated in the flowcharts, or some of the steps described in the flowcharts may be executed in parallel.

Note that the above-described effects are not intended to be limited, and any of the effects described in the present specification, or other effects that can be understood from the present specification, may also be provided along with or instead of the above-described effect.

It should be noted that the foregoing embodiments describe examples for embodying the present disclosure, and the present disclosure can be implemented in various other forms. For example, various modifications, replacements, omissions, or combinations thereof can be made without departing from the essential spirit of the present disclosure. Forms representing such modifications, replacements, omissions, and the like also fall within the scope of the present disclosure as well as the scopes of the invention as set forth in the scope of claims and equivalents thereof.

In addition, the effects of the present disclosure described in the present specification are merely exemplary, and other effects may be provided as well.

Note that the present disclosure can also take on configurations such as those described below.

### [Item 1]

A communication control device including:
a receiving unit that receives a request for radio wave use pertaining to a first wireless communication device;
a transmitting unit that, when the request is received, transmits an obtainment request for communication status information indicating a communication status of a second wireless communication device; and
a control unit that receives the communication status information of the second wireless communication device after the obtainment request has been transmitted, and determines a condition of the radio wave use by the first wireless communication device based on the communication status information of the second wireless communication device.

### [Item 2]

The communication control device according to Item 1, wherein the first wireless communication device belongs to a first group of a plurality of wireless communication devices, and
the second wireless communication device is at least one wireless communication device, among the plurality of wireless communication devices belonging to the first group, that is different from the first wireless communication device.

### [Item 3]

The communication control device according to Item 1 or 2,
wherein an operator of the first wireless communication device is different from an operator of the second wireless communication device.

### [Item 4]

The communication control device according to any one of Items 1 to 3,
wherein the receiving unit receives the request for radio wave use from a management device that manages radio wave use,
the transmitting unit transmits the obtainment request to a network device that manages the communication status of the second wireless communication device, and
the control unit receives the communication status information of the second wireless communication device from the network device.

### [Item 5]

The communication control device according to Item 4,
wherein the transmitting unit transmits an obtainment request for communication status information indicating a communication status of the first wireless communication device to another network device that manages the communication status of the first wireless communication device, and the control unit receives the communication status information of the first wireless communication device from the other network device, and determines a condition of the radio wave use by the first wireless communication device based on the communication status information of the first wireless communication device.

### [Item 6]

The communication control device according to any one of Items 1 to 5,
wherein the control unit determines a parameter of radio wave use that satisfies the condition of the radio wave use, and transmits a response including the parameter.

### [Item 7]

The communication control device according to any one of Items 1 to 6,
wherein the communication status information of the second wireless communication device includes information pertaining to a number of terminals that communicate with the second wireless communication device within coverage of the second wireless communication device.

### [Item 8]

The communication control device according to any one of Items 1 to 7, wherein the communication status information of the second wireless communication device includes information pertaining to an amount of communication data of the second wireless communication device.

### [Item 9]

The communication control device according to any one of Items 1 to 8,
wherein the communication status information of the second wireless communication device is information pertaining to a position of a communication device that communicates with the second wireless communication device within coverage of the second wireless communication device.

### [Item 10]

The communication control device according to any one of Items 1 to 9,
wherein the control unit determines a frequency that can be used by the first wireless communication device as the condition for radio wave use.

### [Item 11]

The communication control device according to any one of Items 1 to 10, wherein the control unit determines a transmission power that can be permitted for the first wireless communication device as the condition for the radio wave use.

### [Item 12]

The communication control device according to Item 11,
wherein the control unit determines the transmission power for each of a plurality of antennas in the second wireless communication device in accordance with a position of a terminal that communicates with the first wireless communication device within coverage of the first wireless communication device.

### [Item 13]

The communication control device according to any one of Items 1 to 12, wherein the control unit determines a condition of radio wave use by the second wireless communication device, and transmits a request to change a parameter pertaining to the radio wave use by the second wireless communication device to a value that satisfies the condition determined.

### [Item 14]

The communication control device according to any one of Items 1 to 13, wherein the control unit receives location information of a first terminal that communicates with the first wireless communication device within coverage of the first wireless communication device,
the control unit receives location information of a second terminal that communicates with the second wireless communication device within coverage of the second wireless communication device, and
the control unit determines a state of interference between (i) communication between the first terminal and the first wireless communication device and (ii) communication between the second terminal and the first wireless communication device based on position information of the first terminal and position information of the second terminal, and determines the condition for the radio wave use according to the state of interference.

### [Item 15]

The communication control device according to Item 14,
wherein the control unit determines a state of interference between (i) a first beam formed between the first terminal and the first wireless communication device and (ii) a second beam formed between the second terminal and the second wireless communication device.

### [Item 16]

The communication control device according to Item 15,
wherein, when the first beam and the second beam interfere, the control unit transmits a stop request for radio wave use to the first wireless communication device or the second wireless communication device.

### [Item 17]

The communication control device according to Item 15 or 16,
wherein, when the first beam and the second beam interfere, the control unit transmits a request to change a beam shape of at least one of the first beam and the second beam.

### [Item 18]

A network device including:
a receiving unit that receives, from a communication control device that determines a usage condition of radio waves for a first wireless communication device, an obtainment request for communication status information indicating a communication status of a second wireless communication device;
a control unit that monitors communication of the second wireless communication device and generates the communication status information of the second wireless communication device; and
a transmitting unit that, when the obtainment request is received, transmits the communication status information of the second wireless communication device to the communication control device.

### [Item 19]

The network device according to Item 18,
wherein the communication status information includes information pertaining to a number of terminals that communicate with the second wireless communication device within coverage of the second wireless communication device.

### [Item 20]

The network device according to Item 18 or 19,
wherein the communication status information includes information pertaining to an amount of communication data of the second wireless communication device.

### [Item 21]

The network device according to any one of Items 18 to 20,
wherein the communication status information includes information pertaining to a position of a terminal that communicates with the second wireless communication device within coverage of the second wireless communication device.

### [Item 22]

A communication control system including a communication control device capable of communicating with a management device that manages radio wave use, and a network device connected to a communication network, wherein the communication control device includes:
a receiving unit that receives, from the management device, a request for radio wave use for a first wireless communication device; and
a transmitting unit that, when the request is received, transmits, to the network device, an obtainment request for communication status information indicating a communication status of a second wireless communication device connected to the communication network,
the network device includes:
   a receiving unit that receives the obtainment request from the communication control device;
   a control unit that monitors communication of the second wireless communication device and generates the communication status information of the second wireless communication device; and
   a transmitting unit that, when the obtainment request is received, transmits the communication status information of the second wireless communication device to the communication control device, and
   the communication control device includes a control unit that receives the communication status information from the network device, and determines a condition of radio wave use by the first wireless communication device based on the communication status information.

### [Item 23]

A communication control method including:
receiving a request for radio wave use for a first wireless communication device;
transmitting, when the request is received, an obtainment request for communication status information indicating a communication status of a second wireless communication device; and
receiving the communication status information of the second wireless communication device after the obtainment request has been transmitted, and determining a condition of the radio wave use by the first wireless communication device based on the communication status information of the second wireless communication device.

### [Item 24]

An information communication method including:
receiving, from a communication control device that determines a usage condition of radio waves for a first wireless communication device, an obtainment request for communication status information indicating a communication status of a second wireless communication device;
monitoring communication of the second wireless communication device and generating the communication status information of the second wireless communication device; and
transmitting, when the obtainment request is received, the communication status information of the second wireless communication device to the communication control device.

### [Reference Signs List]

100 Communication control device
210 Communication unit
220 Storage unit
230 Processing unit
231 Information obtainment unit
232 Control unit
300 Frequency management device
401 Base station
501, 502, 550 Wireless communication system
600 Gateway device
610 Communication unit
620 Storage unit
630 Processing unit
700 Core network configuration device

## Claims

1. A communication control device comprising:
a receiving unit that receives a request for radio wave use pertaining to a first wireless communication device;
a transmitting unit that, when the request is received, transmits an obtainment request for communication status information indicating a communication status of a second wireless communication device; and
a control unit that receives the communication status information of the second wireless communication device after the obtainment request has been transmitted, and determines a condition of the radio wave use by the first wireless communication device based on the communication status information of the second wireless communication device.

2. The communication control device according to claim 1,
wherein the first wireless communication device belongs to a first group of a plurality of wireless communication devices, and
the second wireless communication device is at least one wireless communication device, among the plurality of wireless communication devices belonging to the first group, that is different from the first wireless communication device.

3. The communication control device according to claim 1,
wherein an operator of the first wireless communication device is different from an operator of the second wireless communication device.

4. The communication control device according to claim 1,
wherein the receiving unit receives the request for radio wave use from a management device that manages radio wave use,
the transmitting unit transmits the obtainment request to a network device that manages the communication status of the second wireless communication device, and
the control unit receives the communication status information of the second wireless communication device from the network device.

5. The communication control device according to claim 4,
wherein the transmitting unit transmits an obtainment request for communication status information indicating a communication status of the first wireless communication device to another network device that manages the communication status of the first wireless communication device, and
the control unit receives the communication status information of the first wireless communication device from the other network device, and determines a condition of the radio wave use by the first wireless communication device based on the communication status information of the first wireless communication device.

6. The communication control device according to claim 1,
wherein the control unit determines a parameter of radio wave use that satisfies the condition of the radio wave use, and transmits a response including the parameter.

7. The communication control device according to claim 1,
wherein the communication status information of the second wireless communication device includes information pertaining to a number of terminals that communicate with the second wireless communication device within coverage of the second wireless communication device.

8. The communication control device according to claim 1,
wherein the communication status information of the second wireless communication device includes information pertaining to an amount of communication data of the second wireless communication device.

9. The communication control device according to claim 1,
wherein the communication status information of the second wireless communication device is information pertaining to a position of a communication device that communicates with the second wireless communication device within coverage of the second wireless communication device.

10. The communication control device according to claim 1,
wherein the control unit determines a frequency that can be used by the first wireless communication device as the condition for radio wave use.

11. The communication control device according to claim 1,
wherein the control unit determines a transmission power that can be permitted for the first wireless communication device as the condition for the radio wave use.

12. The communication control device according to claim 11,
wherein the control unit determines the transmission power for each of a plurality of antennas in the second wireless communication device in accordance with a position of a terminal that communicates with the first wireless communication device within coverage of the first wireless communication device.

13. The communication control device according to claim 1,
wherein the control unit determines a condition of radio wave use by the second wireless communication device, and transmits a request to change a parameter pertaining to the radio wave use by the second wireless communication device to a value that satisfies the condition determined.

14. The communication control device according to claim 1,
wherein the control unit receives location information of a first terminal that communicates with the first wireless communication device within coverage of the first wireless communication device,
the control unit receives location information of a second terminal that communicates with the second wireless communication device within coverage of the second wireless communication device, and
the control unit determines a state of interference between (i) communication between the first terminal and the first wireless communication device and (ii) communication between the second terminal and the first wireless communication device based on position information of the first terminal and
position information of the second terminal, and determines the condition for the radio wave use according to the state of interference.

15. The communication control device according to claim 14,
wherein the control unit determines a state of interference between (i) a first beam formed between the first terminal and the first wireless communication device and (ii) a second beam formed between the second terminal and the second wireless communication device.

16. The communication control device according to claim 15,
wherein, when the first beam and the second beam interfere, the control unit transmits a stop request for radio wave use to the first wireless communication device or the second wireless communication device.

17. The communication control device according to claim 15,
wherein, when the first beam and the second beam interfere, the control unit transmits a request to change a beam shape of at least one of the first beam and the second beam.

18. A network device comprising:
a receiving unit that receives, from a communication control device that determines a usage condition of radio waves for a first wireless communication device, an obtainment request for communication status information indicating a communication status of a second wireless communication device;
a control unit that monitors communication of the second wireless communication device and generates the communication status information of the second wireless communication device; and
a transmitting unit that, when the obtainment request is received, transmits the communication status information of the second wireless communication device to the communication control device.

19. The network device according to claim 18,
wherein the communication status information includes information pertaining to a number of terminals that communicate with the second wireless communication device within coverage of the second wireless communication device.

20. The network device according to claim 18,
wherein the communication status information includes information pertaining to an amount of communication data of the second wireless communication device.

21. The network device according to claim 18,
wherein the communication status information includes information pertaining to a position of a terminal that communicates with the second wireless communication device within coverage of the second wireless communication device.

22. A communication control system comprising a communication control device capable of communicating with a management device that manages radio wave use, and a network device connected to a communication network, wherein the communication control device includes:
a receiving unit that receives, from the management device, a request for radio wave use for a first wireless communication device; and
a transmitting unit that, when the request is received, transmits, to the network device, an obtainment request for communication status information indicating a communication status of a second wireless communication device connected to the communication network,
the network device includes:
a receiving unit that receives the obtainment request from the communication control device;
a control unit that monitors communication of the second wireless communication device and generates the communication status information of the second wireless communication device; and
a transmitting unit that, when the obtainment request is received, transmits the communication status information of the second wireless communication device to the communication control device, and
the communication control device includes a control unit that receives the communication status information from the network device, and determines a condition of radio wave use by the first wireless communication device based on the communication status information.

23. A communication control method comprising:
receiving a request for radio wave use for a first wireless communication device;
transmitting, when the request is received, an obtainment request for communication status information indicating a communication status of a second wireless communication device; and
receiving the communication status information of the second wireless communication device after the obtainment request has been transmitted, and
determining a condition of the radio wave use by the first wireless communication device based on the communication status information of the second wireless communication device.

24. An information communication method comprising:
receiving, from a communication control device that determines a usage condition of radio waves for a first wireless communication device, an obtainment request for communication status information indicating a communication status of a second wireless communication device;
monitoring communication of the second wireless communication device and
generating the communication status information of the second wireless communication device; and
transmitting, when the obtainment request is received, the communication status information of the second wireless communication device to the communication control device.
